(19) Europäisches Patentamt / European Patent Office / Office européen des brevets

(11) **EP 3 349 363 B1**

(12) **EUROPEAN PATENT SPECIFICATION**

(45) Date of publication and mention of the grant of the patent:
**09.02.2022 Bulletin 2022/06**

(21) Application number: **16843667.3**

(22) Date of filing: **08.09.2016**

(51) International Patent Classification (IPC):
**H04B 1/7143** *(2011.01)*

(52) Cooperative Patent Classification (CPC):
**H04B 1/7143**

(86) International application number:
**PCT/CN2016/098456**

(87) International publication number:
**WO 2017/041729 (16.03.2017 Gazette 2017/11)**

(54) **INFORMATION TRANSMISSION METHOD AND DEVICE**

INFORMATIONSÜBERTRAGUNGSVERFAHREN UND -VORRICHTUNG

PROCÉDÉ ET DISPOSITIF DE TRANSMISSION D'INFORMATIONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.09.2015 CN 201510574535**

(43) Date of publication of application:
**18.07.2018 Bulletin 2018/29**

(73) Proprietor: **ZTE Corporation**
Shenzhen, Guangdong 518057 (CN)

(72) Inventors:
- **ZHANG, Wen**
  Shenzhen, Guangdong 518057 (CN)
- **XIA, Shuqiang**
  Shenzhen, Guangdong 518057 (CN)
- **DAI, Bo**
  Shenzhen, Guangdong 518057 (CN)
- **HAN, Xianghui**
  Shenzhen, Guangdong 518057 (CN)
- **SHI, Jing**
  Shenzhen, Guangdong 518057 (CN)
- **CHEN, Xianming**
  Shenzhen, Guangdong 518057 (CN)
- **LIU, Kun**
  Shenzhen, Guangdong 518057 (CN)
- **FANG, Huiying**
  Shenzhen, Guangdong 518057 (CN)

(74) Representative: **Regimbeau**
**20, rue de Chazelles**
**75847 Paris Cedex 17 (FR)**

(56) References cited:
WO-A1-2014/110757    CN-A- 101 014 156
CN-A- 102 315 860

- ZTE: "Narrowband definition and frequency hopping patterns for MTC enhancement", 3GPP DRAFT; R1-154042, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Beijing, China; 20150824 - 20150828 15 August 2015 (2015-08-15), XP050992928, Retrieved from the Internet: URL:http://www.3gpp.org/ftp/tsg_ran/WG1_RL 1/TSGR1_82/Docs/ [retrieved on 2015-08-15]
- ZTE: "Discussion on PRACH coverage enhancement for MTC", 3GPP DRAFT; R1-154044, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Beijing, China; 20150824 - 20150828 15 August 2015 (2015-08-15), XP050994106, Retrieved from the Internet: URL:http://www.3gpp.org/ftp/tsg_ran/WG1_RL 1/TSGR1_82/Docs/ [retrieved on 2015-08-15]

**(Cont. next page)**

- **PANASONIC: 'Design of frequency hopping for MTC' 3GPP TSG RAN WG1 MEETING #82 R1-153959, [Online] 14 August 2015, pages 1 - 4, XP050992436 Retrieved from the Internet: <URL:http://www.3gpp.org/ftp/tsg_ran/WG1_RL 1/TSGR1_82/Docs/>**
- **LG ELECTRONICS.: 'Further details on narrowbands and frequency hopping' 3GPP TSG RAN WG1 MEETING #82 R1-154227 28 August 2015, XP050992567**

**Description**

**TECHNICAL FIELD**

The present invention relates to the field of communications and, in particular, to an information transmission method and apparatus.

**BACKGROUND**

Machine Type Communication (MTC) user equipment (UE), also referred to as Machine to Machine (M2M) user communication equipment, is currently the primary application mode of the Internet of Things (IoT).

In recent years, more and more mobile operators have chosen Long-Term Evolution (LTE)/LTE-Advance (LTE-A) as the evolution direction of the broadband wireless communication system due to the high spectral efficiency of LTE/LTE-A. Various MTC data services based on LTE/LTE-A will also be more attractive.

MTC equipment is usually low-cost, featured by a small Radio Frequency (RF) bandwidth and a single receiving antenna, and typically has a transmitting and receiving bandwidth of 1.4 MHz. One type of MTC equipment like electricity meters may be placed in metal cabinets in basements and has poor coverage. 3GPP was projected in R12 and R13 and provides solutions for low-cost MTC UEs with low cost and coverage enhancement. The current solution to coverage enhancement is to improve coverage by extensive repetition of certain channels. One way to reduce the number of repetitions of a channel is to perform frequency hopping in the frequency domain for the channel to obtain the frequency diversity gain. The existing PUSCH frequency hopping method is used for frequency hopping in a subframe or between retransmitted subframes and not for a repeated channel. The present invention provides frequency hopping solutions for repeated channels. The present invention is not limited to scenarios of frequency hopping for repeated channels.

Document "Narrwoband definition and frequency hopping patterns for MTC", ZTE, Rl-154042, discusses narrowband definition, DC and frequency hopping for Rel-13 low complexity UEs in normal and enhanced coverage.

Document "Disscussion on PRACH coverage enhancement for MTC", ZTE, R1-154044, discusses transmission starting subframe selection, resource allocation and hopping pattern for CE MTC PRACH.

**SUMMARY**

Embodiments of the present invention provide an information transmission method and apparatus to solve the problem of how to implement frequency hopping for repeated channels.

To solve the above problem, embodiments of the present invention provide the solutions described below. According to the invention a method according to claim 1, an apparatus according to claim 7 and a storage medium according to claim 8 are provided. Further improvements and embodiments are provided in the dependent claims.

An information transmission method according to an embodiment of the invention comprises:
acquiring a frequency hopping pattern and sending information or a channel on available subframes according to the frequency hopping pattern, where a time-domain granularity for frequency hopping of the frequency hopping pattern is determined by the available subframes.

The time-domain granularity for frequency hopping of the frequency hopping pattern is determined by the available subframes in the following modes:

mode a: when the available subframes are subframes {0, 4, 5, 9} in designated radio frames or two subframes of the subframes {0, 4, 5, 9} in the designated radio frames, the time-domain granularity for frequency hopping is Y = 2f available subframes or the time-domain granularity for frequency hopping is Y = 5f physical subframes;

mode b: when the available subframes are three subframes of the subframes {0, 4, 5, 9} in the designated radio frames, the time-domain granularity for frequency hopping is Y = 3f available subframes or the time-domain granularity for frequency hopping is Y = 10f physical subframes;

mode c: when the available subframes are one subframe of the subframes {0, 4, 5, 9} in the designated radio frames, the time-domain granularity for frequency hopping is Y available subframes or the time-domain granularity for frequency hopping is Y = 10f physical subframes; and

mode d: when the available subframes are m subframes of subframes {0, 4, 5, 9} of one radio frame in the designated radio frames, the time-domain granularity for frequency hopping on the one radio frame is Y = m available subframes or the time-domain granularity for frequency hopping on the one radio frame is Y = 10f physical subframes, where $1 \leq m \leq 4$ and m is an integer,
f is a predefined positive integer, and Y is an integer equal to or greater than 1.

The value f is determined by at least one of a cell identifier and a system bandwidth.

The mode a further includes:

when the available subframes are subframes {4, 5} in the designated radio frames, a subframe 4 and a subframe 5 of one radio frame in the designated radio frames correspond to a same narrowband;

when the available subframes are subframes {0, 9} in the designated radio frames, a subframe 9 of one radio frame in the designated radio frames and a subframe 0 of a next radio frame of the one radio frame correspond to a same narrowband; and

when the available subframes are the subframes {0, 4, 5, 9} in the designated radio frames, the mode a includes one of the following modes:

mode a1: a subframe 4, a subframe 5 and a subframe 9 of one radio frame in the designated radio frames and a subframe 0 of a next radio frame of the one radio frame correspond to a same narrowband;

mode a2: a subframe 9 of one radio frame in the designated radio frames and a subframe 0, a subframe 4 and a subframe 5 of a next radio frame of the one radio frame correspond to a same narrowband;

mode a3: a subframe 4 and a subframe 5 of one radio frame in the designated radio frames correspond to a same narrowband, and a subframe 9 of the one radio frame in the designated radio frames and a subframe 0 of a next radio frame of the one radio frame correspond to a same narrowband.

When the available subframes are the subframes {4, 5} in the designated radio frames and the time-domain granularity for frequency hopping is $Y = 2f$ available subframes or $Y = 10f$ physical subframes, a subframe 4 of an ith radio frame in the designated radio frames through a subframe 5 of an $(i + f - 1)$th radio frame in the designated radio frames correspond to a same narrowband;

when the available subframes are the subframes {0, 9} in the designated radio frames and the time-domain granularity for frequency hopping is $Y = 2f$ available subframes or $Y = 10f$ physical subframes, a subframe 9 of the ith radio frame in the designated radio frames through a subframe 0 of an $(i + f)$th radio frame in the designated radio frames correspond to a same narrowband; and

when the available subframes are the subframes {0, 4, 5, 9} in the designated radio frames and the time-domain granularity for frequency hopping is $Y = 2f$ available subframes or $Y = 5f$ physical subframes, the following modes are included:

mode a1: when f is an even number, the subframe 4 of the ith radio frame in the designated radio frames through a subframe 0 of an $(i + f/2)$th radio frame in the designated radio frames correspond to a same narrowband;

mode a2: when f is an even number, the subframe 9 of the ith radio frame in the designated radio frames through a subframe 5 of the $(i + f/2)$th radio frame in the designated radio frames correspond to a same narrowband; and

mode a3: when f is an odd number, the subframe 4 of the ith radio frame in the designated radio frames through the subframe 5 of the $(i + _{\lfloor}f/2_{\rfloor})$th radio frame in the designated radio frames correspond to a same narrowband, and a subframe 9 of the $(i + _{\lfloor}f/2_{\rfloor})$th radio frame in the designated radio frames through the subframe 0 of the $(i + f)$th radio frame in the designated radio frames correspond to a same narrowband,

the ith radio frame is preset, and i is a positive integer.

The mode b further includes:

when the available subframes are subframes {0, 4, 5} in the designated radio frames, a subframe 4 and a subframe 5 of one radio frame in the designated radio frames and a subframe 0 of a next radio frame of the one radio frame correspond to a same narrowband, or a subframe 0, a subframe 4 and a subframe 5 of one radio frame in the designated radio frames correspond to a same narrowband;

when the available subframes are subframes {0, 4, 9} in the designated radio frames, a subframe 9 of one radio frame in the designated radio frames and a subframe 0 and a subframe 4 of a next radio frame of the one radio frame correspond to a same narrowband, or a subframe 4 and a subframe 9 of one radio frame in the designated radio frames and a subframe 0 of a next radio frame of the radio frame correspond to a same narrowband;

when the available subframes are subframes {0, 5, 9} in the designated radio frames, a subframe 9 of one radio frame in the designated radio frames and a subframe 0 and a subframe 5 of a next radio frame of the one radio frame correspond to a same narrowband, or a subframe 5 and a subframe 9 of one radio frame in the designated radio frames and a subframe 0 of a next radio frame of the one radio frame correspond to a same narrowband; and

when the available subframes are subframes {4, 5, 9} in the designated radio frames, a subframe 4, a subframe 5 and a subframe 9 of one radio frame in the designated radio frames correspond to a same narrowband, or a subframe 5 and a subframe 9 of one radio frame in the designated radio frames and a subframe 4 of a next radio frame of the one radio frame correspond to a same narrowband.

When the available subframes are subframes {0, 4, 5} in the designated radio frames and the time-domain granularity for frequency hopping is Y = 3f available subframes or Y = 10f physical subframes, a subframe 4 of an ith radio frame in the designated radio frames through a subframe 0 of an (i + f)th radio frame in the designated radio frames correspond to a same narrowband, or a subframe 0 of the ith radio frame in the designated radio frames through a subframe 5 of an (i + f - 1)th radio frame in the designated radio frames correspond to a narrowband;

when the available subframes are subframes {0, 4, 9} in the designated radio frames and the time-domain granularity for frequency hopping is Y = 3f available subframes or Y = 10f physical subframes, a subframe 9 of the ith radio frame in the designated radio frames through a subframe 4 of the (i + f)th radio frame in the designated radio frames correspond to a same narrowband, or the subframe 4 of the ith radio frame in the designated radio frames through the subframe 0 of the (i + f)th radio frame in the designated radio frames correspond to a same narrowband;

when the available subframes are subframes {0, 5, 9} in the designated radio frames and the time-domain granularity for frequency hopping is Y = 3f available subframes or Y = 10f physical subframes, the subframe 9 of the ith radio frame in the designated radio frames through a subframe 5 of the (i + f)th radio frame in the designated radio frames correspond to a same narrowband, or a subframe 5 of the ith radio frame in the designated radio frames through the subframe 0 of the (i + f)th radio frame in the designated radio frames correspond to a same narrowband;

when the available subframes are subframes {4, 5, 9} in the designated radio frames and the time-domain granularity for frequency hopping is Y = 3f available subframes or Y = 10f physical subframes, the subframe 9 of the ith radio frame in the designated radio frames through the subframe 5 of the (i + f)th radio frame in the designated radio frames correspond to a same narrowband, or the subframe 4 of the ith radio frame in the designated radio frames through a subframe 9 of the (i + f - 1)th radio frame in the designated radio frames correspond to a same narrowband, the ith radio frame is preset, and i is a positive integer.

The value of the serial number i is determined by at least one of a cell identifier, a system bandwidth, the time-domain granularity for frequency hopping, a radio frame index and a subframe index.

The next radio frame of the radio frame is a radio frame next to the radio frame in the designated radio frames.

The mode c or the mode d further includes:
when a physical subframe index of a last available subframe of one radio frame in the designated radio frames is h, a physical subframe index of a first available radio frame of a next radio frame of the one radio frame in the designated radio frames is not equal to (h + 1) mod 10, where h = 0, 1, 2, ..., 8, 9.

In a different embodiment, not relating to the invention, the time-domain granularity for frequency hopping of the frequency hopping pattern is determined by the available subframes in one of the following modes:

mode a: when the available subframes are subframes {0, 1, 5, 6} in designated radio frames or two subframes of the subframes {0, 1, 5, 6} in the designated radio frames, the time-domain granularity for frequency hopping is Y = 2f available subframes or the time-domain granularity for frequency hopping is Y = 5f physical subframes;

mode b: when the available subframes are three subframes of the subframes {0, 1, 5, 6} in the designated radio frames, the time-domain granularity for frequency hopping is Y = 3f available subframes or the time-domain granularity for frequency hopping is Y = 10f physical subframes;

mode c: when the available subframes are one subframe of the subframes {0, 1, 5, 6} in the designated radio frames, the time-domain granularity for frequency hopping is Y available subframes or the time-domain granularity for frequency hopping is Y = 10f physical subframes; and

mode d: when the available subframes are m subframes of subframes {0, 1, 5, 6} of one radio frame in the designated radio frames, the time-domain granularity for frequency hopping on the one radio frame is Y = m, the time-domain granularity for frequency hopping corresponds to available subframes; or the time-domain granularity for frequency hopping on the one radio frame is Y = 10f, the time-domain granularity for frequency hopping corresponds to physical subframes, where $1 \leq m \leq 4$ and m is an integer,

f is a predefined positive integer.

The mode a further includes:

when the available subframes are subframes {0, 1} in the subframes {0, 1, 5, 6} in the designated radio frames, a subframe 0 and a subframe 1 of one radio frame in the designated radio frames correspond to a same narrowband;

when the available subframes are subframes {5, 6} in the subframes {0, 1, 5, 6} in the designated radio frames, a subframe 5 and a subframe 6 of one radio frame in the designated radio frames correspond to a same narrowband;

when the available subframes are the subframes {0, 1, 5, 6} in the designated radio frames, one of the following modes is included:

a subframe 0, a subframe 1, a subframe 5 and a subframe 6 of one radio frame in the designated radio frames correspond to a same narrowband;

a subframe 5 and a subframe 6 of one radio frame in the designated radio frames and a subframe 0 and a subframe 1 of a next radio frame of the one radio frame correspond to a same narrowband;

a subframe 0 and a subframe 1 of one radio frame in the designated radio frames correspond to a same narrowband, and a subframe 5 and a subframe 6 of one radio frame in the designated radio frames correspond to a same narrowband.

When the available subframes are the subframes {0, 1} in the designated radio frames and the time-domain granularity for frequency hopping is Y = 2f available subframes or Y = 5f physical subframes, a subframe 0 of an ith radio frame in the designated radio frames through a subframe 1 of an (i + f - 1)th radio frame in the designated radio frames correspond to a same narrowband;

when the available subframes are the subframes {5, 6} in the designated radio frames and the time-domain granularity for frequency hopping is Y = 2f available subframes or Y = 5f physical subframes, a subframe 5 of the ith radio frame in the designated radio frames through a subframe 6 of the (i + f - 1)th radio frame in the designated radio frames correspond to a same narrowband;

when the available subframes are the subframes {0, 1, 5, 6} in the designated radio frames and the time-domain granularity for frequency hopping is Y = 2f available subframes or Y = 5f physical subframes, the following modes are included:

mode a1: when f is an even number, the subframe 0 of the ith radio frame in the designated radio frames through a subframe 6 of an (i + f/2 - 1)th radio frame in the designated radio frames correspond to a same narrowband;

mode a2: when f is an even number, the subframe 5 of the ith radio frame in the designated radio frames through a subframe 1 of an (i + f/2)th radio frame in the designated radio frames correspond to a same narrowband;

mode a3: when f is an odd number, the subframe 0 of the ith radio frame in the designated radio frames through the subframe 1 of the $(i + \lfloor f/2 \rfloor)$th radio frame in the designated radio frames are the same, and a narrowband corresponding to a subframe 5 of the $(i + \lfloor f/2 \rfloor)$th radio frame in the designated radio frames through the subframe 6 of the (i + f - 1)th radio frame in the designated radio frames correspond to a same narrowband,

the ith radio frame is preset, and i is a positive integer.

The mode b further includes:

when the available subframes are subframes {0, 1, 5} in the designated radio frames, a subframe 5 of one radio frame in the designated radio frames and a subframe 0 and a subframe 1 of a next radio frame of the one radio frame correspond to a same narrowband, or a subframe 0, a subframe 1 and a subframe 5 of one radio frame in the designated radio frames correspond to a same narrowband;

when the available subframes are subframes {0, 1, 6} in the designated radio frames, a subframe 6 of one radio frame in the designated radio frames and a subframe 0 and a subframe 1 of a next radio frame of the one radio frame correspond to a same narrowband, or a subframe 0, a subframe 1 and a subframe 6 of one radio frame in the designated radio frames correspond to a same narrowband;

when the available subframes are subframes {0, 5, 6} in the designated radio frames, a subframe 5 and a subframe 6 of one radio frame in the designated radio frames and a subframe 0 of a next radio frame of the one radio frame correspond to a same narrowband, or a subframe 0, a subframe 5 and a subframe 6 of one radio frame in the designated radio frames correspond to a same narrowband; and

when the available subframes are subframes {1, 5, 6} in the designated radio frames, a subframe 1, a subframe 5 and a subframe 6 of one radio frame in the designated radio frames correspond to a same narrowband, or a subframe 5 and a subframe 6 of one radio frame in the designated radio frames and a subframe 1 of a next radio frame of the one radio frame correspond to a same narrowband.

The mode b further includes:

when the available subframes are the subframes {0, 1, 5} in the designated radio frames and the time-domain granularity for frequency hopping is Y = 3f available subframes or Y = 10f physical subframes, a subframe 0 of an ith radio frame in the designated radio frames through a subframe 5 of an (i + f - 1)th radio frame in the designated radio frames correspond to a same narrowband, or a subframe 5 of the ith radio frame in the designated radio frames through a subframe 1 of an (i + f)th radio frame in the designated radio frames correspond to a same narrowband;

when the available subframes are the subframes {0, 1, 6} in the designated radio frames and the time-domain granularity for frequency hopping is Y = 3f available subframes or Y = 10f physical subframes, the subframe 0 of the ith radio frame in the designated radio frames through a subframe 6 of the (i + f - 1)th radio frame in the designated radio frames correspond to a same narrowband, or a subframe 6 of the ith radio frame in the designated radio frames through the subframe 1 of the (i + f)th radio frame in the designated radio frames correspond to a same narrowband;

when the available subframes are the subframes {0, 5, 6} in the designated radio frames and the time-domain granularity for frequency hopping is Y = 3f available subframes or Y = 10f physical subframes, the subframe 0 of the ith radio frame in the designated radio frames through the subframe 6 of the (i + f- 1)th radio frame in the designated radio frames correspond to a same narrowband, or the subframe 5 of the ith radio frame in the designated radio frames through a subframe 0 of the (i + f)th radio frame in the designated radio frames correspond to a same narrowband; and

when the available subframes are the subframes {1, 5, 6} in the designated radio frames and the time-domain granularity for frequency hopping is Y = 3f available subframes or Y = 10f physical subframes, a subframe 1 of the ith radio frame in the designated radio frames through the subframe 6 of the (i + f - 1)th radio frame in the designated radio frames correspond to a same narrowband, or the subframe 5 of the ith radio frame in the designated radio frames through the subframe 1 of the (i + f)th radio frame in the designated radio frames correspond to a same narrowband,

the ith radio frame is preset, and i is a positive integer.

The value of the serial number i is determined by at least one of a cell identifier, a system bandwidth, the time-domain granularity for frequency hopping, a radio frame index and a subframe index.

The mode c or the mode d further includes the following mode:
when a physical subframe index of a last available subframe of one radio frame in the designated radio frames is h, a physical subframe index of a first available radio frame of a next radio frame of the one radio frame in the designated radio frames is not equal to (h + 1) mod 10, where h = 0, 1, 2, ..., 8, 9.

A frequency hopping sequence in the frequency hopping pattern is determined by one of the following:

a preset hash function; and
a preset pseudo-random sequence.

The preset hash function and/or the preset pseudo-random sequence is determined by a cell identifier.

The frequency hopping sequence is determined by a preset number of consecutive bits in the pseudo-random sequence.

The frequency hopping sequence of the frequency hopping pattern satisfies $H_k = Y_k \bmod N$,

wherein $Y_k = AY_{k-1} \bmod D$,

wherein $Y_{-1} = N_{ID}^{cell} + 1$, k denotes a frequency hopping count, A and D denote preset values, $N_{ID}^{cell}$ denotes a cell identifier and N denotes a number of narrowbands for frequency hopping.

The frequency hopping sequence of the frequency hopping pattern satisfies:

$n_{NB}(k) = (\lfloor N/2 \rfloor \cdot k + c) \bmod N$, or

$$n_{NB}(k) = ((N/2)\lfloor k \bmod N \rfloor + \left\lfloor \frac{k \bmod N}{2} \right\rfloor + c) \bmod N,$$

k denotes a frequency hopping count, N denotes a number of narrowbands for frequency hopping and c denotes a preset value.

The frequency hopping pattern satisfies $H_{n_{rf}, n_{sf}} = ( \sum_{i=0}^{U} c(W+i) \cdot 2^i ) \bmod N$,

where $n_{rf}$ denotes a radio frame index, $n_{sf}$ denotes a subframe index, U denotes a difference between the number of the consecutive bits and one, and N denotes a number of narrowbands for frequency hopping; and c(i) denotes a predefined pseudo-random sequence determined by at least one of a cell identifier, the radio frame index and the subframe index,

W is determined by at least one of the following modes:

$$W = 4(U+1)n_{rf} + (U+1)n_{sw};$$

$$W = 4(U+1)n_{rf} + (U+1)n_{sf};$$

$$W = 2(U+1)n_{rf} + (U+1)\left\lfloor \frac{n_{sw}}{2} \right\rfloor;$$

$$W = 2(U+1)n_{rf} + (U+1)\left\lfloor \frac{n_{sf}}{5} \right\rfloor;$$

$$W = 2(U+1)n_{rf} + (U+1)\left\lfloor \frac{n_{sw}+\Delta_1}{2} \right\rfloor;$$

and

$$W = 2(U+1)n_{rf} + (U+1)\left\lfloor \frac{n_{sf}+\Delta_2}{2} \right\rfloor,$$

where $n_{sw} = 2\left\lfloor \frac{n_{sf}}{5} \right\rfloor + \frac{n_{sf} \bmod 5}{4}$, and $\Delta_1$ and $\Delta_2$ are predefined integers.

The parameter c is determined by a cell identifier.

The narrowbans for frequency hopping and/or the number of the narrowbands for frequency hopping in the frequency hopping pattern is preset or notified by an evolved base station (eNB).

The narrowbands for frequency hopping and/or the number of the narrowbands for frequency hopping in the frequency hopping pattern is notified by the eNB as follows:

when the information is a system information block-1 (SIB-1), the narrowbands for frequency hopping and/or a number of the narrowbands for frequency hopping in the frequency hopping pattern of the SIB-1, which is sent in a master information block (MIB) by the eNB, is received.

The narrowbands for frequency hopping and/or the number of the narrowbands for frequency hopping in the frequency hopping pattern is preset as follows:

the narrowbands for frequency hopping and/or the number of the narrowbands for frequency hopping is determined by a cell identifier and/or a system bandwidth, or
an index of a set of the narrowbands for frequency hopping is determined by the cell identifier and/or the system bandwidth.

When the number of the narrowbands for frequency hopping in the frequency hopping pattern is two, the two narrowbands for frequency hopping satisfy:

$m_0 = m'$ mod M, and

$$m_1 = (m_0 + \lfloor m'/M \rfloor + 1) \bmod M,$$

where $m' = N_{ID}^{cell} + q(q+1)/2$ , $q = \left\lfloor \dfrac{N_{ID}^{cell} + q'(q'+1)/2}{30} \right\rfloor$ , $q' = \left\lfloor N_{ID}^{cell}/(N-1) \right\rfloor$ , M denotes a number of the available narrowbands and $N_{ID}^{cell}$ denotes the cell identifier.

The narrowbands for frequency hopping and/or the number of the narrowbands for frequency hopping is determined by the cell identifier as follows:

the number of the narrowbands for frequency hopping in the frequency hopping pattern is N, and an index of the N narrowbands for frequency hopping satisfies:

$$g_0 = \left( N_{ID}^{cell} + C \right) \bmod M;$$

and

$$g_n = \left( g_0 + n \cdot \left\lfloor \frac{M}{N} \right\rfloor \right) \bmod M,$$

where $1 \leq n \leq N - 1$,

where C denotes a preset integer, $N_{ID}^{cell}$ denotes the cell identifier, M denotes a number of the available narrowbands and n denotes an integer.

A frequency hopping sequence of the frequency hopping pattern satisfies $n_{NB}(k) = \left( g_0 + \left\lfloor \frac{M}{N} \right\rfloor \cdot h(k) \right) \bmod M$ , where $g_0 = \left( N_{ID}^{cell} + C \right) \bmod M$ ,

where k denotes a frequency hopping count, $N_{ID}^{cell}$ denotes a cell identifier, C denotes a preset value, M denotes a number of available narrowbands, N denotes a number of narrowbands for frequency hopping and h(k) denotes a pre-selected function.

The function h(k) is obtained from at least one of the cell identifier, a radio frame number and a subframe number.

The available subframes are determined by a cell identifier.

The frequency hopping count is determined by at least one of the cell identifier, a radio frame index and a subframe index.

The narrowbands for frequency hopping are narrowbands used to send the information or the channel in a cell by way of frequency hopping.

The available narrowbands are narrowbands predefined on a system bandwidth of a cell.

An information transmission apparatus according to a further embodiment of the invention includes:

an acquisition module, which is configured to acquire a frequency hopping pattern; and

a sending module, which is configured to send information or a channel on available subframes according to the frequency hopping pattern, where a time-domain granularity for frequency hopping of the frequency hopping pattern is determined by the available subframes.

The time-domain granularity for frequency hopping of the frequency hopping pattern is determined by the available subframes in one of the following modes:

mode a: when the available subframes are subframes {0, 4, 5, 9} in designated radio frames or two subframes of the subframes {0, 4, 5, 9} in the designated radio frames, the time-domain granularity for frequency hopping is $Y = 2f$ available subframes or the time-domain granularity for frequency hopping is $Y = 5f$ physical subframes;

mode b: when the available subframes are three subframes of the subframes {0, 4, 5, 9} in the designated radio frames, the time-domain granularity for frequency hopping is $Y = 3f$ available subframes or the time-domain granularity for frequency hopping is $Y = 10f$ physical subframes;

mode c: when the available subframes are one subframe of the subframes {0, 4, 5, 9} in the designated radio frames, the time-domain granularity for frequency hopping is $Y$ available subframes or the time-domain granularity for frequency hopping is $Y = 10f$ physical subframes; and

mode d: when the available subframes are m subframes of subframes {0, 4, 5, 9} of one radio frame in the designated radio frames, the time-domain granularity for frequency hopping on the radio frame is $Y = m$ available subframes or the time-domain granularity for frequency hopping on the radio frame is $Y = 10f$ physical subframes, where $1 \leq m \leq 4$ and m is an integer,

f is a predefined positive integer, and Y is an integer equal to or greater than 1.

The value f is determined by at least one of a cell identifier and a system bandwidth.

The mode a further includes:

when the available subframes are subframes {4, 5} in the designated radio frames, a subframe 4 and a subframe 5 of one radio frame in the designated radio frames correspond to a same narrowband;

when the available subframes are subframes {0, 9} in the designated radio frames, a subframe 9 of one radio frame in the designated radio frames and a subframe 0 of a next radio frame of the radio frame correspond to a same narrowband;

when the available subframes are the subframes {0, 4, 5, 9} in the designated radio frames, the mode a includes one of the following modes:

mode a1: a subframe 4, a subframe 5 and a subframe 9 of one radio frame in the designated radio frames and a subframe 0 of a next radio frame of the one radio frame correspond to a same narrowband;

mode a2: a subframe 9 of one radio frame in the designated radio frames and a subframe 0, a subframe 4 and a subframe 5 of a next radio frame of the one radio frame correspond to a same narrowband;

mode a3: a subframe 4 and a subframe 5 of one radio frame in the designated radio frames correspond to a same narrowband, and a subframe 9 of the one radio frame in the designated radio frames and a subframe 0 of a next radio frame of the one radio frame correspond to a same narrowband.

When the available subframes are the subframes {4, 5} in the designated radio frames and the time-domain granularity for frequency hopping is $Y = 2f$ available subframes or $Y = 10f$ physical subframes, a subframe 4 of an ith radio frame in the designated radio frames through a subframe 5 of an $(i + f - 1)$th radio frame in the designated radio frames correspond to a same narrowband;

when the available subframes are the subframes {0, 9} in the designated radio frames and the time-domain granularity for frequency hopping is $Y = 2f$ available subframes or $Y = 10f$ physical subframes, a subframe 9 of the ith radio frame in the designated radio frames through a subframe 0 of an $(i + f)$th radio frame in the designated radio frames correspond to a same narrowband;

when the available subframes are the subframes {0, 4, 5, 9} in the designated radio frames and the time-domain granularity for frequency hopping is Y = 2f available subframes or Y = 5f physical subframes, the following modes are included:

mode a1: when f is an even number, the subframe 4 of the ith radio frame in the designated radio frames through a subframe 0 of an (i + f/2)th radio frame in the designated radio frames correspond to a same narrowband;

mode a2: when f is an even number, the subframe 9 of the ith radio frame in the designated radio frames through a subframe 5 of the (i + f/2)th radio frame in the designated radio frames correspond to a same narrowband;

mode a3: when f is an odd number, the subframe 4 of the ith radio frame in the designated radio frames through the subframe 5 of the $(i + \lfloor f/2 \rfloor)$th radio frame in the designated radio frames correspond to a same narrowband, and a subframe 9 of the $(i + \lfloor f/2 \rfloor)$th radio frame in the designated radio frames through the subframe 0 of the (i + f)th radio frame in the designated radio frames correspond to a same narrowband,

the ith radio frame is preset, and i is a positive integer.

The mode b further includes:

when the available subframes are subframes {0, 4, 5} in the designated radio frames, a subframe 4 and a subframe 5 of one radio frame in the designated radio frames and a subframe 0 of a next radio frame of the one radio frame correspond to a same narrowband, or a subframe 0, a subframe 4 and a subframe 5 of one radio frame in the designated radio frames correspond to a same narrowband;

when the available subframes are subframes {0, 4, 9} in the designated radio frames, a subframe 9 of one radio frame in the designated radio frames and a subframe 0 and a subframe 4 of a next radio frame of the one radio frame correspond to a same narrowband, or a subframe 4 and a subframe 9 of one radio frame in the designated radio frames and a subframe 0 of a next radio frame of the one radio frame correspond to a same narrowband;

when the available subframes are subframes {0, 5, 9} in the designated radio frames, a subframe 9 of one radio frame in the designated radio frames and a subframe 0 and a subframe 5 of a next radio frame of the one radio frame correspond to a same narrowband, or a subframe 5 and a subframe 9 of one radio frame in the designated radio frames and a subframe 0 of a next radio frame of the one radio frame correspond to a same narrowband; and

when the available subframes are subframes {4, 5, 9} in the designated radio frames, a subframe 4, a subframe 5 and a subframe 9 of one radio frame in the designated radio frames correspond to a same narrowband, or a subframe 5 and a subframe 9 of one radio frame in the designated radio frames and a subframe 4 of a next radio frame of one the radio frame correspond to a same narrowband.

When the available subframes are subframes {0, 4, 5} in the designated radio frames and the time-domain granularity for frequency hopping is Y = 3f available subframes or Y = 10f physical subframes, a subframe 4 of an ith radio frame in the designated radio frames through a subframe 0 of an (i + f)th radio frame in the designated radio frames correspond to a same narrowband, or a subframe 0 of the ith radio frame in the designated radio frames through a subframe 5 of an (i + f - 1)th radio frame in the designated radio frames correspond to a same narrowband;

when the available subframes are subframes {0, 4, 9} in the designated radio frames and the time-domain granularity for frequency hopping is Y = 3f available subframes or Y = 10f physical subframes, a subframe 9 of the ith radio frame in the designated radio frames through a subframe 4 of the (i + f)th radio frame in the designated radio frames correspond to a same narrowband, or the subframe 4 of the ith radio frame in the designated radio frames through the subframe 0 of the (i + f)th radio frame in the designated radio frames correspond to a same narrowband;

when the available subframes are subframes {0, 5, 9} in the designated radio frames and the time-domain granularity for frequency hopping is Y = 3f available subframes or Y = 10f physical subframes, the subframe 9 of the ith radio frame in the designated radio frames through a subframe 5 of the (i + f)th radio frame in the designated radio frames correspond to a same narrowband, or a subframe 5 of the ith radio frame in the designated radio frames through the subframe 0 of the (i + f)th radio frame in the designated radio frames correspond to a same narrowband; and

when the available subframes are subframes {4, 5, 9} in the designated radio frames and the time-domain granularity for frequency hopping is Y = 3f available subframes or Y = 10f physical subframes, the subframe 9 of the ith radio frame in the designated radio frames through the subframe 5 of the (i + f)th radio frame in the designated radio frames correspond to a same narrowband, or the subframe 4 of the ith radio frame in the designated radio frames through a subframe 9 of the (i + f- 1)th radio frame in the designated radio frames correspond to a same narrowband,

the ith radio frame is preset, and i is a positive integer.

The value of the serial number i is determined by at least one of a cell identifier, a system bandwidth, the time-domain granularity for frequency hopping, a radio frame index and a subframe index.

The next radio frame of the radio frame is a radio frame next to the radio frame in the designated radio frames.

The mode c or the mode d further includes:

when a physical subframe index of a last available subframe of one radio frame in the designated radio frames is h, a physical subframe index of a first available radio frame of a next radio frame of the one radio frame in the designated radio frames is not equal to (h + 1) mod 10, where h = 0, 1, 2, ..., 8, 9.

In a different embodiment, not relating to the invention, the time-domain granularity for frequency hopping of the frequency hopping pattern is determined by the available subframes in one of the following modes:

mode a: when the available subframes are subframes {0, 1, 5, 6} in designated radio frames or two subframes of the subframes {0, 1, 5, 6} in the designated radio frames, the time-domain granularity for frequency hopping is Y = 2f available subframes or the time-domain granularity for frequency hopping is Y = 5f physical subframes;

mode b: when the available subframes are three subframes of the subframes {0, 1, 5, 6} in the designated radio frames, the time-domain granularity for frequency hopping is Y = 3f available subframes or the time-domain granularity for frequency hopping is Y = 10f physical subframes;

mode c: when the available subframes are one subframe of the subframes {0, 1, 5, 6} in the designated radio frames, the time-domain granularity for frequency hopping is Y available subframes or the time-domain granularity for frequency hopping is Y = 10f physical subframes; and

mode d: when the available subframes are m subframes of subframes {0, 1, 5, 6} of one radio frame in the designated radio frames, the time-domain granularity for frequency hopping on the one radio frame is Y = m, the time-domain granularity for frequency hopping corresponds to available subframes, or the time-domain granularity for frequency hopping on the one radio frame is Y = 10f, the time-domain granularity for frequency hopping corresponds to physical subframes, where $1 \leq m \leq 4$ and m is an integer,

f is a predefined positive integer.

The mode a further includes:

when the available subframes are subframes {0, 1} in the subframes {0, 1, 5, 6} in the designated radio frames, a subframe 0 and a subframe 1 of one radio frame in the designated radio frames correspond to a same narrowband;

when the available subframes are subframes {5, 6} in the subframes {0, 1, 5, 6} in the designated radio frames, a subframe 5 and a subframe 6 of one radio frame in the designated radio frames correspond to a same narrowband;

when the available subframes are the subframes {0, 1, 5, 6} in the designated radio frames, one of the following modes is included:

a subframe 0, a subframe 1, a subframe 5 and a subframe 6 of one radio frame in the designated radio frames correspond to a same narrowband;

a subframe 5 and a subframe 6 of one radio frame in the designated radio frames and a subframe 0 and a subframe 1 of a next radio frame of the one radio frame correspond to a same narrowband;

a subframe 0 and a subframe 1 of one radio frame in the designated radio frames correspond to a same narrowband, and a subframe 5 and a subframe 6 of one radio frame in the designated radio frames correspond to a same narrowband.

When the available subframes are the subframes {0, 1} in the designated radio frames and the time-domain granularity for frequency hopping is Y = 2f available subframes or Y = 5f physical subframes, a subframe 0 of an ith radio frame in the designated radio frames through a subframe 1 of an (i + f - 1)th radio frame in the designated radio frames correspond to a same narrowband;

when the available subframes are the subframes {5, 6} in the designated radio frames and the time-domain granularity for frequency hopping is Y = 2f available subframes or Y = 5f physical subframes, a subframe 5 of the ith radio frame in the designated radio frames through a subframe 6 of the (i + f - 1)th radio frame in the designated radio frames correspond to a same narrowband;

when the available subframes are the subframes {0, 1, 5, 6} in the designated radio frames and the time-domain granularity for frequency hopping is Y = 2f available subframes or Y = 5f physical subframes, the following modes are included:

mode a1: when f is an even number, the subframe 0 of the ith radio frame in the designated radio frames through a subframe 6 of an (i + f/2 - 1)th radio frame in the designated radio frames correspond to a same narrowband;

mode a2: when f is an even number, the subframe 5 of the ith radio frame in the designated radio frames through a subframe 1 of an (i + f/2)th radio frame in the designated radio frames correspond to a same narrowband;

mode a3: when f is an odd number, the subframe 0 of the ith radio frame in the designated radio frames through the subframe 1 of the (i + $_{\lfloor}$f/2$_{\rfloor}$)th radio frame in the designated radio frames correspond to a same narrowband, and a subframe 5 of the (i + $_{\lfloor}$f/2$_{\rfloor}$)th radio frame in the designated radio frames through the subframe 6 of the (i + f - 1)th radio frame in the designated radio frames correspond to a same narrowband,

the ith radio frame is preset, and i is a positive integer.

The mode b further includes:

when the available subframes are subframes {0, 1, 5} in the designated radio frames, a subframe 5 of one radio frame in the designated radio frames and a subframe 0 and a subframe 1 of a next radio frame of the one radio frame correspond to a same narrowband, or a subframe 0, a subframe 1 and a subframe 5 of one radio frame in the designated radio frames correspond to a same narrowband;

when the available subframes are subframes {0, 1, 6} in the designated radio frames, a subframe 6 of one radio frame in the designated radio frames and a subframe 0 and a subframe 1 of a next radio frame of the one radio frame correspond to a same narrowband, or a subframe 0, a subframe 1 and a subframe 6 of one radio frame in the designated radio frames correspond to a same narrowband;

when the available subframes are subframes {0, 5, 6} in the designated radio frames, a subframe 5 and a subframe 6 of one radio frame in the designated radio frames and a subframe 0 of a next radio frame of the one radio frame correspond to a same narrowband, or a subframe 0, a subframe 5 and a subframe 6 of one radio frame in the designated radio frames correspond to a same narrowband; and

when the available subframes are subframes {1, 5, 6} in the designated radio frames, a subframe 1, a subframe 5 and a subframe 6 of one radio frame in the designated radio frames correspond to a same narrowband, or a subframe 5 and a subframe 6 of one radio frame in the designated radio frames and a subframe 1 of a next radio frame of the one radio frame correspond to a same narrowband.

The mode b further includes:

when the available subframes are the subframes {0, 1, 5} in the designated radio frames and the time-domain granularity for frequency hopping is Y = 3f available subframes or Y = 10f physical subframes, a subframe 0 of an ith radio frame in the designated radio frames through a subframe 5 of an (i + f - 1)th radio frame in the designated radio frames correspond to a same narrowband, or a subframe 5 of the ith radio frame in the designated radio frames through a subframe 1 of an (i + f)th radio frame in the designated radio frames correspond to a same narrowband;

when the available subframes are the subframes {0, 1, 6} in the designated radio frames and the time-domain granularity for frequency hopping is Y = 3f available subframes or Y = 10f physical subframes, the subframe 0 of the ith radio frame in the designated radio frames through a subframe 6 of the (i + f- 1)th radio frame in the designated radio frames correspond to a same narrowband, or a subframe 6 of the ith radio frame in the designated radio frames through the subframe 1 of the (i + f)th radio frame in the designated radio frames correspond to a same narrowband;

when the available subframes are the subframes {0, 5, 6} in the designated radio frames and the time-domain granularity for frequency hopping is Y = 3f available subframes or Y = 10f physical subframes, the subframe 0 of the ith radio frame in the designated radio frames through the subframe 6 of the (i + f- 1)th radio frame in the designated radio frames correspond to a same narrowband, or the subframe 5 of the ith radio frame in the designated radio frames through a subframe 0 of the (i + f)th radio frame in the designated radio frames correspond to a same narrowband; and

when the available subframes are the subframes {1, 5, 6} in the designated radio frames and the time-domain granularity for frequency hopping is Y = 3f available subframes or Y = 10f physical subframes, a subframe 1 of the ith radio frame in the designated radio frames through the subframe 6 of the (i + f- 1)th radio frame in the designated radio frames correspond to a same narrowband, or the subframe 5 of the ith radio frame in the designated radio frames through the subframe 1 of the (i + f)th radio frame in the designated radio frames correspond to a same narrowband,

the ith radio frame is preset, and i is a positive integer.

The value of the serial number i is determined by at least one of a cell identifier, a system bandwidth, the time-domain granularity for frequency hopping, a radio frame index and a subframe index.

The mode c or the mode d further includes the following mode:

when a physical subframe index of a last available subframe of one radio frame in the designated radio frames is h, a physical subframe index of a first available radio frame of a next radio frame of the one radio frame in the designated radio frames is not equal to (h + 1) mod 10, where h = 0, 1, 2, ..., 8, 9.

A frequency hopping sequence in the frequency hopping pattern is determined by one of the following:

a preset hash function; and
a preset pseudo-random sequence.

The preset hash function and/or the preset pseudo-random sequence includes:

The preset hash function and/or the preset pseudo-random sequence is determined by a cell identifier.

The frequency hopping sequence is determined by a preset number of consecutive bits in the pseudo-random sequence.

The frequency hopping sequence of the frequency hopping pattern satisfies $H_k = Y_k$ mod N,

where $Y_k = AY_{k-1}$ mod D,

where $Y_{-1} = N_{ID}^{cell} + 1$, k denotes a frequency hopping count, A and D denote preset values, $N_{ID}^{cell}$ denotes a cell identifier and N denotes a number of narrowbands for frequency hopping.

The frequency hopping sequence of the frequency hopping pattern satisfies:

$n_{NB}(k) = (\lfloor N/2 \rfloor \cdot k + c)$ mod N; or

$$n_{NB}(k) = ((N/2)\lfloor k \bmod N \rfloor + \left\lfloor \frac{k \bmod N}{2} \right\rfloor + c) \bmod N,$$

where k denotes a frequency hopping count, N denotes a number of narrowbands for frequency hopping and c denotes a preset value.

The frequency hopping pattern satisfies $H_{n_{rf}, n_{sf}} = (\sum_{i=0}^{U} c(W+i) \cdot 2^i)$ mod N,

where $n_{rf}$ denotes a radio frame index, $n_{sf}$ denotes a subframe index, U denotes a difference between the number of the consecutive bits and one, and N denotes a number of narrowbands for frequency hopping; and c(i) denotes a predefined pseudo-random sequence determined by at least one of a cell identifier, the radio frame index and the subframe index.

W is determined by at least one of the following modes:

$$W = 4(U+1)n_{rf} + (U+1)n_{sw};$$

$$W = 4(U+1)n_{rf} + (U+1)n_{sf};$$

$$W = 2(U+1)n_{rf} + (U+1)\left\lfloor\frac{n_{sw}}{2}\right\rfloor;$$

$$W = 2(U+1)n_{rf} + (U+1)\left\lfloor\frac{n_{sf}}{5}\right\rfloor;$$

$$W = 2(U+1)n_{rf} + (U+1)\left\lfloor\frac{n_{sw}+\Delta_1}{2}\right\rfloor;$$

and

$$W = 2(U+1)n_{rf} + (U+1)\left\lfloor\frac{n_{sf}+\Delta_2}{2}\right\rfloor,$$

where $n_{sw} = 2\left\lfloor\frac{n_{sf}}{5}\right\rfloor + \frac{n_{sf} \bmod 5}{4}$ , and $\Delta_1$ and $\Delta_2$ are predefined integers.

The parameter c is determined by a cell identifier.

The narrowbands for frequency hopping and/or the number of the narrowbands for frequency hopping in the frequency hopping pattern is preset or notified by an eNB.

The narrowbands for frequency hopping and/or the number of the narrowbands for frequency hopping in the frequency hopping pattern is notified by the eNB as follows:

when the information is a system information block-1 (SIB-1), the narrowbands for frequency hopping and/or the number of the narrowbands for frequency hopping in the frequency hopping pattern of the SIB-1, which is sent in a master information block (MIB) by the eNB, is received.

The narrowbands for frequency hopping and/or the number of the narrowbands for frequency hopping in the frequency hopping pattern is preset as follows:

the narrowbands for frequency hopping and/or the number of the narrowbands for frequency hopping is determined by a cell identifier and/or a system bandwidth, or

an index of a set of the narrowbands for frequency hopping is determined by the cell identifier and/or the system bandwidth.

When the number of the narrowbands for frequency hopping in the frequency hopping pattern is two, the two narrowbands for frequency hopping satisfy:

$m_0 = m'$ mod M, and

$$m_1 = (m_0 + \lfloor m'/M\rfloor + 1) \bmod M,$$

where $m' = N_{ID}^{cell} + q(q+1)/2$ , $q = \left\lfloor\frac{N_{ID}^{cell} + q'(q'+1)/2}{30}\right\rfloor$ , $q' = \left\lfloor N_{ID}^{cell}/(N-1)\right\rfloor$ , M denotes a number of the available narrowbands and $N_{ID}^{cell}$ denotes the cell identifier.

The narrowbands for frequency hopping and/or the number of the narrowbands for frequency hopping is determined by the cell identifier as follows:

the number of the narrowbands for frequency hopping in the frequency hopping pattern is N, and an index of the N narrowbands for frequency hopping satisfies:

$$g_0 = \left(N_{ID}^{cell}+C\right) \bmod M;$$

and

$$g_n = \left(g_0+n\cdot\left\lfloor\frac{M}{N}\right\rfloor\right) \bmod M,$$

where $1 \leq n \leq N - 1$,

where C denotes a preset integer, $N_{ID}^{cell}$ denotes the cell identifier, M denotes a number of the available narrowbands and n denotes an integer.

A frequency hopping sequence of the frequency hopping pattern satisfies $n_{NB}(k) = \left(g_0+\left\lfloor\frac{M}{N}\right\rfloor\cdot h(k)\right) \bmod M$, where

$$g_0 = \left(N_{ID}^{cell}+C\right) \bmod M,$$

where k denotes a frequency hopping count, $N_{ID}^{cell}$ denotes a cell identifier, C denotes a preset value, M denotes a number of available narrowbands, N denotes a number of narrowbands for frequency hopping and h(k) denotes a pre-selected function.

The function h(k) is obtained from at least one of the cell identifier, a radio frame number and a subframe number.

The available subframes are determined by a cell identifier.

The frequency hopping count is determined by at least one of the cell identifier, a radio frame index and a subframe index.

The narrowbands for frequency hopping are narrowbands used to send the information or the channel in a cell by way of frequency hopping.

The available narrowbands are narrowbands predefined on a system bandwidth of a cell.

A further embodiment of the present invention provides a storage medium. The storage medium is configured to store program codes for performing the steps of acquiring a frequency hopping pattern and sending information or a channel on available subframes according to the frequency hopping pattern, where a time-domain granularity for frequency hopping of the frequency hopping pattern is determined by the available subframes.

In embodiments of the present invention, the steps of acquiring a frequency hopping pattern and sending information or a channel on available subframes according to the frequency hopping pattern can implement frequency hopping for repeated channels.

## BRIEF DESCRIPTION OF DRAWINGS

The accompanying drawings described herein are used to provide a further understanding of the present invention, and form a part of the present application. The schematic embodiments and descriptions thereof in the present invention are used to explain the present invention, and do not form improper limits to the present invention. In the accompanying drawings:

FIG. 1 is a flowchart of an information transmission method according to the present invention.
FIG. 2 is a diagram illustrating an example in which available subframes of SIB-1 are sent in subframes 0, 4, 5, and 9 of all radio frames according to the present invention.
FIG. 3 is a diagram illustrating an example in which a subframe 4 and a subframe 5 of one radio frame in designated radio frames and a subframe 0 of a next radio frame of the radio frame correspond to a same narrowband according to the present invention.
FIG. 4 is a diagram illustrating a frequency hopping pattern for available subframes 0, 5 and 9 according to the present invention.

FIG. 5 is a structural diagram of an information transmission apparatus according to the present invention.

**DETAILED DESCRIPTION**

Objects, solutions and advantages of the present invention will be more apparent from the detailed description of the present invention in conjunction with the following embodiments and accompanying drawings. If not in collision, the embodiments described herein and the features thereof may be combined with each other.

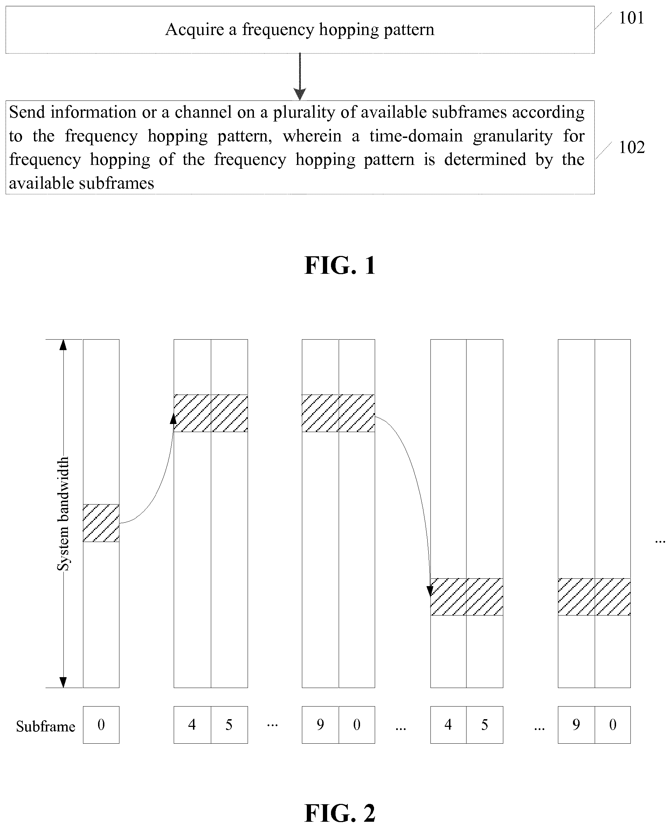

FIG. 1 is a flowchart of an information transmission method according to the present invention. The method shown in FIG. 1 includes the steps described below.

In step 101, a frequency hopping pattern is acquired.

In step 102, information or a channel is sent on available subframes according to the frequency hopping pattern, where a time-domain granularity for frequency hopping of the frequency hopping pattern is determined by the available subframes.

In embodiments of the present invention, the steps of acquiring a frequency hopping pattern and sending information or a channel on available subframes according to the frequency hopping pattern can implement frequency hopping for repeated channels.

Embodiment 1:

The method provided by this embodiment is applicable to all scenarios in which there are multiple subchannels.

In this embodiment, a system bandwidth is divided into narrowbands according to a rule which is preset or notified by an eNB. The division rule and the notification signaling of the system bandwidth are not limited in the present invention. For example, every 6 PRBs starting from a lowest PRB index of the system bandwidth are grouped into one narrowband. Information or a channel is transmitted by way of frequency hopping between narrowbands according to a designated pattern. The information may be at least one of the following: SIB, paging message, downlink control information for scheduling paging message, random access preamble, RAR, downlink control information for scheduling RAR, message 3, downlink control information, downlink data, uplink control information, and uplink data. The channel may be at least one of the following: downlink control channel PDCCH or enhanced downlink control channel EPDCCH, downlink data, uplink control channel, uplink data, and PRACH.

This embodiment provides an example of determining a time-domain granularity for frequency hopping according to the number of available subframes. The time-domain granularity for frequency hopping Y refers to Y consecutive subframes in which the information or the channel is transmitted on the same narrowband. The Y consecutive subframes may correspond to consecutive physical subframes, i.e., physical subframes defined in the related art. For example, when Y = 5, transmission is performed on narrowband 0 in subframes 0 to 4 and on narrowband 1 in subframes 5 to 9, i.e., subframes 0 to 4 correspond to narrowband 0 and subframes 5 to 9 correspond to narrowband 1. Here, subframes actually used for transmission (i.e., available subframes) may be all or part of subframes 0 to 9. For example, when available subframes are subframes 1, 3, 7, 8 and 9, transmission is performed on narrowband 0 in subframes 1 and 3 and on narrowband 1 in subframes 7, 8 and 9. Alternatively, the Y consecutive subframes may also correspond to available subframes in an available subframe set. For example, when Y = 4 and available subframes are subframes 0, 2, 3, 4, 5, 6, 8 and 9, transmission is performed on narrowband 0 in subframes 0, 2, 3 and 4 and on narrowband 1 in subframes 5, 6, 8 and 9.

In addition, for one transmission of the information or the channel, Y may be fixed (e.g., Y = 4), or Y may vary with time (e.g., Y = 2 in some radio frames and Y = 4 in some other radio frames).

In the discussion about MTC of Rel-13, for FDD, subframes allowable to SIB-1 transmission (also referred to as available subframes of SIB-1) are one or more of subframes {0, 4, 5, 9}; and for TDD, subframes allowable to SIB-1 transmission are one or more of subframes {0, 5} and it is to be further studied whether subframes {1, 6} can be used for SIB-1 transmission.

This embodiment provides an example of determining the time-domain granularity for frequency hopping according to the available subframes of the SIB-1. The method provided in this embodiment is not limited to the SIB-1 and may also be used for other information or channels.

Configuration of available subframes for SIB-1 transmission has a certain influence on update of an initial subframe and selection of the granularity for frequency hopping Y for the SIB-1 information. To facilitate multi-subframe channel estimation in SIB-1 demodulation, frequency hopping should not occur in the transmission subframes; instead, the transmission should be performed on the same narrowband in consecutive subframes as most as possible.

Analysis is made for the cases described below.

Case 1:

Assuming that the SIB-1 is sent in subframes 0, 4, 5 and 9 of designated radio frames. the designated radio frames may be all radio frames, odd-numbered radio frames, even-numbered radio frames, some preset radio frames, or some radio frames configured by the eNB.

In view that subframes 4 and 5 are two consecutive subframes and subframes 9 and 0 are two consecutive subframes, Y = 2f (f = 1, 2, ...) is a reasonable option. Here, Y corresponds to available subframes, and f may be a predefined positive integer, e.g., preferably, Y = 2 or 4. Alternatively, f may be determined by a cell identifier and/or a system bandwidth, e.g., f = $f = (N_{ID}^{cell} \bmod 2) + 1$. Alternatively, the time-domain granularity for frequency hopping is Y = 5f, and the time-domain granularity for frequency hopping corresponds to physical subframes.

During frequency hopping, a subframe 4 and a subframe 5 of one radio frame correspond to a same narrowband, and a subframe 9 of one subframe and a subframe 0 of a next subframe of the radio frame correspond to a same narrowband.

Alternatively, a subframe 4, a subframe 5 and a subframe 9 of one radio frame in the designated radio frames and a subframe 0 of a next radio frame of the radio frame correspond to a same narrowband. Alternatively, a subframe 9 of one radio frame in the designated radio frames and a subframe 0, a subframe 4 and a subframe 5 of a next radio frame of the radio frame correspond to a same narrowband. Here, the next radio frame of the radio frame is the next radio frame in the designated radio frames. For example, when the designated radio frames are even-numbered frames and the radio frame is a radio frame 12, the next radio frame is a next even-numbered frame, i.e., a radio frame 14. FIG. 2 illustrates an example in which the available subframes of the SIB-1 are subframes 0, 4, 5, and 9 of all radio frames and the frequency hopping granularity is 4. In this case, in a subframe 0 of a radio frame 0, the SIB-1 is sent on one narrowband; and in a subframe 4 of the radio frame 0, the SIB-1 is sent on another narrowband after frequency hopping; and subframes 4, 5 and 9 of the radio frame 0 and a subframe 0 of a radio frame 1 correspond to a same narrowband. Alternatively, SIB-1 transmission starts from the subframe 4 of the radio frame 0 and the SIB-1 is not sent in the subframe 0 of the radio frame 0.

Further, if the available subframes are the subframes {0, 4, 5, 9} in the designated radio frames and the time-domain granularity for frequency hopping is Y = 2f available subframes or Y = 5f physical subframes, one of the following modes is included.

Mode a1:

If f is an even number, a subframe 4 of an ith radio frame in the designated radio frames through a subframe 0 of an (i + f/2)th radio frame in the designated radio frames correspond to a same narrowband. For example, if f = 2, the subframe 4 of the ith radio frame through a subframe 0 of an (i + 1)th radio frame correspond to a same narrowband.

Mode a2:

If f is an even number, a subframe 9 of the ith radio frame in the designated radio frames through a subframe 5 of the (i + f/2)th radio frame in the designated radio frames correspond to a same narrowband.

Mode a3:

If f is an odd number, the subframe 4 of the ith radio frame in the designated radio frames through the subframe 5 of the (i + ⌊f/2⌋)th radio frame in the designated radio frames correspond to a same narrowband, and a subframe 9 of the (i + ⌊f/2⌋)th radio frame in the designated radio frames through a subframe 0 of an (i + f)th radio frame in the designated radio frames correspond to a same narrowband. For example, if f = 3, then Y = 6, and the subframe 4 of the ith radio frame in the designated radio frames through a subframe 5 of the (i + 1)th radio frame in the designated radio frames correspond to a same narrowband, a subframe 9 of the (i + radio frame in the designated radio frames through a subframe 0 of an (i + 3)th radio frame in the designated radio frames correspond to a same narrowband.

The ith radio frame is preset. i is determined by at least one of the cell identifier, the system bandwidth, the time-domain granularity for frequency hopping, a radio frame index and a subframe index. For example, $i = f \cdot n_{wf} + n_{ID}^{cell} \bmod f + 1$, where $n_{wf}$ may be a physical frame index, or an index after radio frames in the designated radio frames are renumbered from 0.

Further, it may be defined that an initial subframe used for sending an updated SIB-1 message is subframe 4 or subframe 9. If the initial subframe for sending the updated SIB-1 message is subframe 0, then after the updated SIB-1 message is sent on one narrowband in subframe 0, the updated SIB-1 message is sent on another narrowband in subframe 4 by way of frequency hopping. In this case, UE cannot perform a joint channel estimation, thus affecting receptivity of the UE. This is also the case with subframe 5. Therefore, the initial subframe used for sending the upldated SIB-1 message should be subframe 4 or subframe 9.

Case 2:

Assuming that the SIB-1 is sent in one of the subframes {0, 4, 5, 9} in the designated radio frames, Y = f, and f may be a predefined positive integer or may be determined by the cell identifier or the system bandwidth. Here, Y is for available subframes. Alternatively, the time-domain granularity for frequency hopping is Y = 10f, and the time-domain granularity for frequency hopping corresponds to physical subframes.

If indexes of available subframes of respective radio frames are different (e.g., the available subframes are circularly used in the sequence of subframes 0, 4, 5, 9, 0, 4, 5, 9 in different radio frames), when Y = 1, in some radio frames, frequency hopping may occur in subframes allowing SIB-1 transmission. To avoid this from happening, it is preferable to take 4 radio frames as a cycle, and the used subframe sequence vary with every 4 radio frames. For example, in radio frames 0 to 3, the used subframe sequence is 0, 4, 5, 9, and in radio frames 4 to 7, the used subframe sequence is 4, 5, 9, 0, ..., as long as available subframes of two adjacent radio frames are not adjacent.

Preferably, Y may be equal to the number of consecutive subframes. For example, the designated radio frames are all radio frames, available subframes of even-numbered radio frames are subframes 9, and available subframes of odd-numbered radio frames are subframes 0, where subframe 9 and subframe 0 are consecutive and adjacent to each other, then Y = 2.

Case 3:

Assuming that the SIB-1 is sent in two of the subframes {0, 4, 5, 9} in the designated radio frames and, preferably, in subframes 4 and 5 or subframes 0 and 9. In this case, Y = 2f (f= 1, 2, ...). Here, Y is for available subframes. Here, f may be a predefined positive integer or f may be determined by the cell identifier and/or the system bandwidth. Alternatively, the time-domain granularity for frequency hopping is Y = 10f, and the time-domain granularity for frequency hopping corresponds to physical subframes. In this case, a subframe 4 and a subframe 5 of one radio frame in the designated radio frames correspond to a same narrowband, and a subframe 9 of one radio frame in the designated radio frames and a subframe 0 of a next radio frame of the radio frame correspond to a same narrowband.

When the available subframes are subframes 0 and 9, the SIB-1 is sent on one narrowband in the subframe 0 of the radio frame 0, and the SIB-1 is sent on another narrowband in the subframe 9 of the radio frame 0 by way of frequency hopping. The subframe 9 of the radio frame 0 and the subframe 0 of the radio frame 1 corerspond to a same narrowband. Alternatively, SIB-1 transmission starts from the subframe 9 of the radio frame 0 and the SIB-1 is not sent in the subframe 0 of the radio frame 0.

Further, if the available subframes are the subframes {4, 5} in the designated radio frames and the time-domain granularity for frequency hopping is Y = 2f available subframes or Y = 10f physical subframes, then the subframe 4 of the ith radio frame in the designated radio frames through a subframe 5 of an (i + f - 1)th radio frame in the designated radio frames correspond to a same narrowband;

if the available subframes are the subframes {0, 9} in the designated radio frames and the time-domain granularity for frequency hopping is Y = 2f available subframes or Y = 10f physical subframes, then the subframe 9 of the ith radio frame in the designated radio frames through the subframe 0 of the (i + f)th radio frame in the designated radio frames correspond to a same narrowband.

Case 4:

Assuming that the SIB-1 is sent in three of the subframes {0, 4, 5, 9} in the designated radio frames. In this case, Y = 3f (f = 1, 2, ...), Y corresponds to available subframes, and f may be a predefined positive integer or may be determined by the cell identifier or the system bandwidth. Alternatively, the time-domain granularity for frequency hopping is Y = 10f, and the time-domain granularity for frequency hopping corresponds to physical subframes.

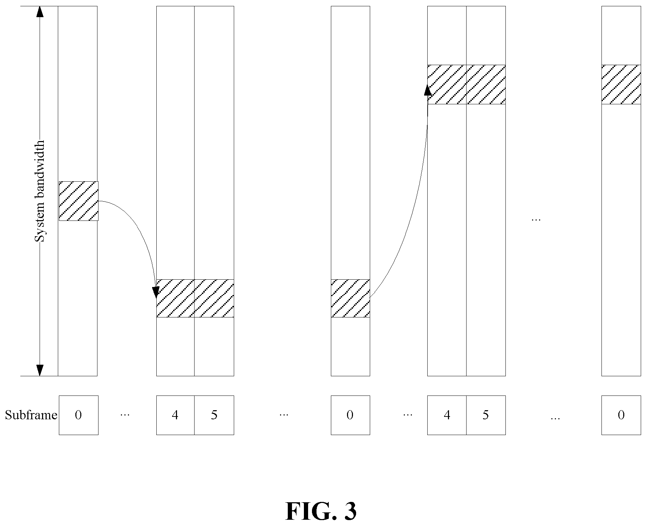

If the available subframes are subframes {0, 4, 5} in the designated radio frames, then a subframe 4 and a subframe 5 of one radio frame in the designated radio frames and a subframe 0 of a next radio frame of the radio frame correspond to a same narrowband; or a subframe 0, a subframe 4 and a subframe 5 of one radio frame in the designated radio frames correspond to a same narrowband. FIG. 3 illustrates an example in which a subframe 4 and a subframe 5 of one radio frame in designated radio frames and a subframe 0 of a next radio frame of the radio frame correspond to a same narrowband. In this case, the SIB-1 is sent on one narrowband in the subframe 0 of the radio frame 0, and the SIB-1 is sent on another narrowband in the subframe 4 of the radio frame 0 by way of frequency hopping; and subframes 4, 5 and 9 of the radio frame 0 and the subframe 0 of the radio frame 1 correspond to a same narrowband. Alternatively, SIB-1 transmission starts from the subframe 5 of the radio frame 0 and the SIB-1 is not sent in the subframe 0 of the radio frame 0.

If the available subframes are subframes {0, 4, 9} in the designated radio frames, then a subframe 9 of one radio frame in the designated radio frames and a subframe 0 and a subframe 4 of a next radio frame of the radio frame correspond to a same narrowband, or a subframe 4 and a subframe 9 of one radio frame in the designated radio frames and a subframe 0 of a next radio frame of the radio frame correspond to a same narrowband.

If the available subframes are subframes {0, 5, 9} in the designated radio frames, then a subframe 9 of one radio frame in the designated radio frames and a subframe 0 and a subframe 5 of a next radio frame of the radio frame correspond to a same narrowband, or a subframe 5 and a subframe 9 of one radio frame in the designated radio frames and a subframe 0 of a next radio frame of the radio frame correspond to a same narrowband.

If the available subframes are subframes {4, 5, 9} in the designated radio frames, then a subframe 4, a subframe 5 and a subframe 9 of one radio frame in the designated radio frames correspond to a same narrowband, or a subframe 5 and a subframe 9 of one radio frame in the designated radio frames and a subframe 4 of a next radio frame of the radio frame correspond to a same narrowband.

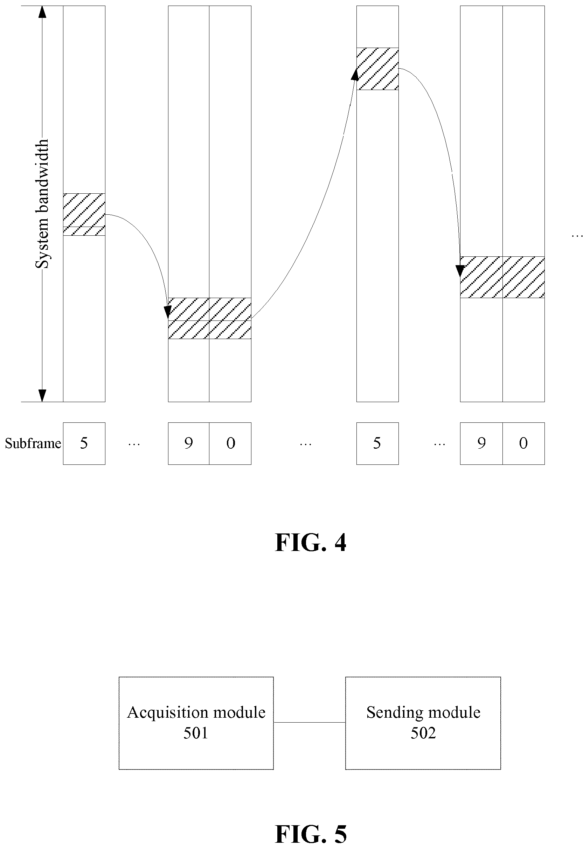

Alternatively, Y may be a variable, e.g., alternating between 2 and 1 as time passes. For example, the available subframes are 0, 5 and 9, and the frequency hopping pattern is as shown in FIG. 4 in which Y is 1, 2, 1, 2, ..., alternately. Here, Y is for available subframes.

Alternatively, Y is determined based on actual physical subframes, e.g., Y=5 ms. When the available subframes are subframes 0, 5, and 9, it can be considered that subframes 1 through 5 of one radio frame correspond to a same narrowband and subframes 6 through 0 of a next radio frame of the radio frame correspond to a same narrowband.

Further, if the available subframes are subframes {0, 4, 5} in the designated radio frames and the time-domain granularity for frequency hopping is Y = 3f available subframes or Y = 10f physical subframes, then the subframe 4 of the ith radio frame in the designated radio frames through the subframe 0 of the (i + f)th radio frame in the designated radio frames correspond to a same narrowband, or a subframe 0 of the ith radio frame in the designated radio frames through the subframe 5 of the (i + f- 1)th radio frame in the designated radio frames correspond to a same narrowband;

if the available subframes are subframes {0, 4, 9} in the designated radio frames and the time-domain granularity for frequency hopping is Y = 3f available subframes or Y = 10f physical subframes, then the subframe 9 of the ith radio frame in the designated radio frames through a subframe 4 of the (i + f)th radio frame in the designated radio frames correspond to a same narrowband, or the subframe 4 of the ith radio frame in the designated radio frames through the subframe 0 of the (i + f)th radio frame in the designated radio frames correspond to a same narrowband;

if the available subframes are subframes {0, 5, 9} in the designated radio frames and the time-domain granularity for frequency hopping is Y = 3f available subframes or Y = 10f physical subframes, then the subframe 9 of the ith radio frame in the designated radio frames through a subframe 5 of the (i + f)th radio frame in the designated radio frames correspond to a same narrowband, or a subframe 5 of the ith radio frame in the designated radio frames through the subframe 0 of the (i + f)th radio frame in the designated radio frames correspond to a same narrowband;

if the available subframes are subframes {4, 5, 9} in the designated radio frames and the time-domain granularity for frequency hopping is Y = 3f available subframes or Y = 10f physical subframes, then the subframe 9 of the ith radio frame in the designated radio frames through the subframe 5 of the (i + f)th radio frame in the designated radio frames correspond to a same narrowband, or the subframe 4 of the ith radio frame in the designated radio frames through a subframe 9 of the (i + f- 1)th radio frame in the designated radio frames correspond to a same narrowband.

The ith radio frame is preset. The value i is determined by at least one of the cell identifier, the system bandwidth, the time-domain granularity for frequency hopping, the radio frame index and the subframe index.

Case 5:

If available subframes of one radio frame in the designated radio frames are m ($1 \leq m \leq 4$) subframes of subframes {0, 4, 5, 9}, and if different radio frames may have different numbers of available subframes, then the time-domain granularity for frequency hopping on the radio frame is Y = m and the time-domain granularity for frequency hopping corresponds to the available subframes. For example, there are 3 available sub-frames in even-numbered radio frames and 2 available subframes in odd-numbered radio frames, then Y = 3 in even-numbered radio frames and Y = 2 in odd-numbered radio frames.

Similar to the above, the following describes how to determine Y when available subframes are subframes {0, 1, 5, 6} in the designated radio frames.

Mode a:

If the available subframes are subframes {0, 1, 5, 6} in designated radio frames or two of the subframes {0, 1, 5, 6} in the designated radio frames, then the time-domain granularity for frequency hopping is Y = 2f available subframes or the time-domain granularity for frequency hopping is Y = 5f physical subframes.

The mode a is described below.

If the available subframes are subframes {0, 1} in the subframes {0, 1, 5, 6} in the designated radio frames, then a subframe 0 and a subframe 1 of one radio frame in the designated radio frames correspond to a same narrowband.

Further, if the available subframes are the subframes {0, 1} in the designated radio frames and the time-domain granularity for frequency hopping is Y = 2f available subframes or Y = 10f physical subframes, then the subframe 0 of the ith radio frame in the designated radio frames through a subframe 1 of the (i + f - 1)th radio frame in the designated radio frames correspond to a same narrowband;

if the available subframes are the subframes {5, 6} in the subframes {0, 1, 5, 6} in the designated radio frames, then a subframe 5 and a subframe 6 of one radio frame in the designated radio frames correspond to a same narrowband.

Further, if the available subframes are the subframes {5, 6} in the designated radio frames and the time-domain granularity for frequency hopping is Y = 2f available subframes or Y = 10f physical subframes, then the subframe 5 of the ith radio frame in the designated radio frames through a subframe 6 of the (i + f - 1)th radio frame in the designated radio frames correspond to a same narrowband;

if the available subframes are the subframes {0, 1, 5, 6} in the designated radio frames, subframes 0, 1, 5 and 6 of one radio frame in the designated radio frames correspond to a same narrowband. Alternatively, a subframe 5 and a subframe 6 of one radio frame in the designated radio frames and a subframe 0 and a subframe 1 of a next radio frame of the radio frame correspond to a same narrowband. Alternatively, a subframe 0 and a subframe 1 of one radio frame in the designated radio frames correspond to a same narrowband, and a subframe 5 and a subframe 6 of one radio frame in the designated radio frames correspond to a same narrowband.

Further, if the available subframes are the subframes {0, 1, 5, 6} in the designated radio frames and the time-domain granularity for frequency hopping is Y = 2f available subframes or Y = 5f physical subframes, the following modes are included:

Mode a1:
if f is an even number, the subframe 0 of the ith radio frame in the designated radio frames through a subframe 6 of an (i + f/2 - 1)th radio frame in the designated radio frames correspond to a same narrowband;

Mode a2:
if f is an even number, the subframe 5 of the ith radio frame in the designated radio frames through a subframe 1 of an (i + f/2)th radio frame in the designated radio frames correspond to a same narrowband;

Mode a3:
if f is an odd number, the subframe 0 of the ith radio frame in the designated radio frames through the subframe 1 of the (i + $\lfloor$f/2$\rfloor$)th radio frame in the designated radio frames correspond to a same narrowband, and the subframe 5 of the (i + $\lfloor$f/2$\rfloor$)th radio frame in the designated radio frames through the subframe 6 of the (i + f - 1)th radio frame in the designated radio frames correspond to a same narrowband.

The ith radio frame is preset.

Mode b:

If the available subframes are three subframes of the subframes {0, 1, 5, 6} in the designated radio frames, then the time-domain granularity for frequency hopping is Y = 3f available subframes or the time-domain granularity for frequency hopping is Y = 10f physical subframes.

The mode b is described below.

If the available subframes are subframes {0, 1, 5} in the designated radio frames, then a subframe 5 of one radio frame in the designated radio frames and a subframe 0 and a subframe 1 of a next radio frame of the radio frame correspond to a same narrowband, or a subframe 0, a subframe 1 and a subframe 5 of one radio frame in the designated radio frames correspond to a same narrowband.

Further, if the available subframes are subframes {0, 1, 5} in the designated radio frames and the time-domain granularity for frequency hopping is Y = 3f available subframes or Y = 10f physical subframes, then the subframe 0 of the ith radio frame in the designated radio frames through the subframe 5 of the (i + f)th radio frame in the designated radio frames correspond to a same narrowband, or the subframe 5 of the ith radio frame in the designated radio frames through a subframe 1 of the (i + f)th radio frame in the designated radio frames correspond to a same narrowband.

If the available subframes are subframes {0, 1, 6} in the designated radio frames, then a subframe 6 of one radio frame in the designated radio frames and a subframe 0 and a subframe 1 of a next radio frame of the radio frame correspond to a same narrowband, or a subframe 0, a subframe 1 and a subframe 6 of one radio frame in the designated radio frames correspond to a same narrowband.

Further, if the available subframes are the subframes {0, 1, 6} in the designated radio frames and the time-domain granularity for frequency hopping is Y = 3f available subframes or Y = 10f physical subframes, then the subframe 0 of the ith radio frame in the designated radio frames through the subframe 6 of the (i + f - 1)th radio frame in the designated radio frames correspond to a same narrowband, or a subframe 6 of the ith radio frame in the designated radio frames through the subframe 1 of the (i + f)th radio frame in the designated radio frames correspond to a same narrowband.

If the available subframes are subframes {0, 5, 6} in the designated radio frames, then narrowbands corresponding to a subframe 5 and a subframe 6 of one radio frame in the designated radio frames and a narrowband corresponding to a subframe 0 of a next radio frame of the radio frame are the same, or narrowbands corresponding to a subframe 0, a subframe 5 and a subframe 6 of one radio frame in the designated radio frames are the same.

Further, if the available subframes are the subframes {0, 5, 6} in the designated radio frames and the time-domain granularity for frequency hopping is Y = 3f available subframes or Y = 10f physical subframes, then the subframe 0 of the ith radio frame in the designated radio frames through the subframe 6 of the (i + f - 1)th radio frame in the designated radio frames correspond to a same narrowband, or the subframe 5 of the ith radio frame in the designated radio frames through the subframe 0 of the (i + f)th radio frame in the designated radio frames correspond to a same narrowband.

If the available subframes are subframes {1, 5, 6} in the designated radio frames, then a subframe 1, a subframe 5 and a subframe 6 of one radio frame in the designated radio frames correspond to a same narrowband, or a subframe 5 and a subframe 6 of one radio frame in the designated radio frames and a subframe 1 of a next radio frame of the radio frame correspond to a same narrowband.

Further, if the available subframes are the subframes {1, 5, 6} in the designated radio frames and the time-domain granularity for frequency hopping is Y = 3f available subframes or Y = 10f physical subframes, then the subframe 1 of the ith radio frame in the designated radio frames through the subframe 6 of the (i + f - 1)th radio frame in the designated radio frames correspond to a same narrowband, or the subframe 5 of the ith radio frame in the designated radio frames through the subframe 1 of the (i + f)th radio frame in the designated radio frames correspond to a same narrowband.

Mode c:

If the available subframes are one subframe of the subframes {0, 1, 5, 6} in the designated radio frames, then the time-domain granularity for frequency hopping is Y available subframes or the time-domain granularity for frequency hopping is Y = 10f physical subframes.

In mode c, when a physical subframe index of a last available subframe of one radio frame in the designated radio frames is h, a physical subframe index of a first available radio frame of a next radio frame of the one radio frame in the designated radio frames is not equal to (h + 1) mod 10, where h = 0, 1, 2, ..., 8, 9.

Mode d:

If the available subframes are m ($1 \leq m \leq 4$) subframes of subframes {0, 1, 5, 6} of one radio frame in the designated radio frames, then the time-domain granularity for frequency hopping on the radio frame is Y = m, the time-domain granularity for frequency hopping corresponds to available subframes; or the time-domain granularity for frequency hopping on the radio frame is Y = 10f, the time-domain granularity for frequency hopping corresponds to physical subframes;

k is a predefined positive integer.

In mode c, when a physical subframe index of a last available subframe of one radio frame in the designated radio frames is h, a physical subframe index of a first available radio frame of a next radio frame of the one radio frame in the designated radio frames is not equal to (h + 1) mod 10, where h = 0, 1, 2, ..., 8, 9.

Embodiment 2:

Assuming that there are N narrowbands for frequency hopping for the information or the channel, and the indexes of the N narrowbands are 0, 1, ..., N - 1. For example, the information refers to SIB, and then the SIB of a cell is sent on the N narrowbands by way of frequency hopping. The N may be different for different cells. Further, N may be determined by at least one of a cell identifier and a system bandwidth. For example, if the system bandwidth is greater than or equal to 10 MHz, then N = 4; otherwise, N = 2. The definition of the narrowband for frequency hopping also applies to other embodiments. For the above N narrowbands used for frequency hopping of the information or the channel, for a certain cell, assuming that narrowband indexes corresponding to frequency hopping positions of the information or the channel are $H_0$, $H_1$, ..., also referred to as a frequency hopping sequence. In this case, the kth frequency hopping position $H_k$ is determined by the following mode:

$$H_k = Y_k \bmod N,$$

where $Y_k = AY_{k-1} \bmod D$,

$$Y_{-1} = N_{ID}^{cell} + 1$$

A and D are preset constants, $N_{ID}^{cell}$ is the cell identifier. For example, in the existing LTE technology, the value of $N_{ID}^{cell}$ is selected from 0 to 503. The preferred values of A and D are given below.

The following factors need to be considered for the value of D:

D should be a prime number;
in view that the number of cell IDs is 504 and D should not be less than 504, it can be found that the minimum prime number greater than 505 is 509;
the number of frequency hopping in the sending period, for example, assuming that the SIB-1 is repeatedly sent in one sending period, the number of repetitions is comprised between 300 and 500 and the maximum number of frequency hopping is 500, to ensure that frequency hopping patterns do not overlap in the sending period, the value of D should be greater than the number of frequency hopping.

In view that the indexes of radio frames are counted from 0 to 1023, this means that the number of repetitions of the SIB-1 in extreme cases should not exceed 1024 x R (R is equal to the number of subframes used for SIB-1 transmission in each radio frame and has a maximum value of 4).

In overall consideration of the above points, the value of D should be a prime number between 509 and 1024 x R. From the perspective of performance and implementation, 509 is a preferred value of D.

Different form the value of D, the value of A has a greater impact on the collision probability and A preferably has the following two values:

Value 1:

When A/D is closest to the golden ratio $\frac{\sqrt{5}-1}{2}$ (approximately 0.618), A = 315 and A/D = 0.618861.

Value 2:

The ratio between values of parameters in the PDCCH search space formula in the LTE standard is $\frac{39827}{65537}$ (approximately 0.6077). The value of A may be a value closest to $\frac{39827}{65537} \times D$. In this case, A= 309.

An example is described below. Assuming that the number of available subframes is 2 and are subframes 4 and 5 of all radio frames. In this case, starting from subframe 4 of radio frame 0, subframes 4 and 5 of radio frame 0 correspond to narrowband $H_0$, subframes 4 and 5 of radio frame 1 correspond to narrowband $H_1$, and so on.

When the above formula is matched with radio frames and/or subframes, the frequency hopping count k in $H_k$ may be determined by the radio frames and/or the subframes and/or the cell identifier. In an example:

$$k=(10 \cdot n_{wf}+n_{sf}+c) \bmod Y,$$

where c can be determined by the cell identifier (e.g., $c = N_{ID}^{cell} \bmod 10$), and Y is a granularity for frequency hopping, where the granularity for frequency hopping corresponds to physical subframes (e.g., Y = 10 ms).

Embodiment 3:

Similar to embodiment 2, in embodiment 3, for the above N narrowbands used for frequency hopping of the information or the channel, for a certain cell, assuming that in subframe $n_{sf}$ of radio frame $n_{rf}$ (e.g., $n_{rf} \in \{0, 1...102\}$, and $n_{sf} \in \{0, 4, 5, 9\}$ or $n_{sf} \in \{0, 1, 5, 6\}$), where $n_{rf}$ denotes radio frame index and $n_{sf}$ denotes subframe index, narrowband indexes corresponding to frequency hopping positions of the information or the channel are $H_{n_{rf}, n_{sf}}$. $H_{n_{rf}, n_{sf}}$ is determined by the following mode:

$$H_{n_{rf}, n_{sf}}=( \sum_{i=0}^{U} c(W+i) \cdot 2^{i} ) \bmod N.$$

c(i) is a predefined pseudo-random sequence. The pseudo-random sequence is initialized using $c_{init} = N_{ID}^{cell}$ (the initialization has multiple possibilities, e.g., one initialization every 1024 radio frames or one initialization after a number of sending configured by the network) or is initialized using cell identifier and/or physical radio frame index and/or physical subframe index, e.g., $c_{init} = N_{ID}^{cell} + 2^{9}(n_{sf} \bmod 4)$.

In an example of pseudo-random sequence, the pseudo-random sequence c(n) is generated from a Gold sequence having a length of 31:

$$c(n) = (x_1(n+N_c)+x_2(n+N_c)) \bmod 2,$$

$$x_1(n+31) = (x_1(n+3)+x_1(n)) \bmod 2,$$

$$x_2(n+31) = (x_2(n+3)+x_2(n+2)+x_2(n+1)x_2(n)) \bmod 2.$$

Here $N_c$ = 1600, the first m sequence is initialized using $x_1(0) = 1$, $x_1(n) = 0$, n = 1, 2,...,30. The second m sequence is initialized using cell identifier. For example, for FDD, $c_{init} = N_{ID}^{cell}$ and $c_{init} = \sum_{i=0}^{30} x_2(i) \cdot 2^{i}$.

(U+1) denotes the number of binary bits needed to generate a random number. For example, (U+1) = 8, i.e., U = 7.

W is a parameter related to radio frame index, subframe index and Y. Several examples of W are given below. Assuming Y = 1:

Frequency hopping is performed for the information or the channel in subframes {0, 4, 5, 9} (4 subframes) of each radio frame. Several definitions of W are given below.

Mode 1:

$$W = 4(U+1)n_{rf} + (U+1)n_{sw},$$

$$n_{sw} = 2 \left\lfloor \frac{n_{sf}}{5} \right\rfloor + \frac{n_{sf} \bmod 5}{4}.$$

Here, $n_{rf}$ denotes radio frame index and $n_{sf}$ denotes subframe index. The effect of the formula $n_{sw}$ is: when $n_{sf}$ is equal to 0, 4, 5, 9, $n_{sw}$ is equal to 0, 1, 2, 3.

Mode 2:

$$W = 4(U+1)n_{rf} + (U+1)n_{sf}.$$

Assuming Y = 2:
Frequency hopping is performed for the information or the channel in subframes {0, 4, 5, 9} (4 subframes) of each radio frame. Several definitions of W are given below.

Mode 1:

$$W = 2(U+1)n_{rf} + (U+1)\left\lfloor \frac{n_{sw}}{2} \right\rfloor.$$

The above formula enables that subframes 0 and 5 of one radio frame correspond to a same narrowband, and that the subframe 5 of one radio frame and the subframe 9 of the next radio frame correspond to a same narrowband.

Mode 2:

$$W = 2(U+1)n_{rf} + (U+1)\left\lfloor \frac{n_{sf}}{5} \right\rfloor.$$

The above formula enables that subframes 0 and 5 of one radio frame correspond to a same narrowband, and that the subframe 5 of one radio frame and the subframe 9 of the next radio frame correspond to a same narrowband.

Mode 3:

$$W = 2(U+1)n_{rf} + (U+1)\left\lfloor \frac{n_{sw}+\Delta_1}{2} \right\rfloor.$$

$\Delta_1$ is a constant value. Preferably, if $\Delta_1$ is 1, then the above formula enables that subframes 4 and 5 of one radio frame correspond to a same narrowband, and that the subframe 9 of one radio frame and the subframe 0 of the next radio frame correspond to a same narrowband. This avoids frequency hopping between consecutive subframes 4 and 5 and frequency hopping between consecutive subframes 9 and 0.

Mode 4:

$$W = 2(U+1)n_{rf} + (U+1)\left\lfloor \frac{n_{sw}+\Delta_1}{2} \right\rfloor.$$

$\Delta_2$ is a constant value. Preferably, if $\Delta_2$ is any one of integers 1 to 4, then the above formula enables that subframes 4 and 5 of one radio frame correspond to a same narrowband, and that the subframe 9 of one radio frame and the subframe 0 of the next radio frame correspond to a same narrowband. This avoids frequency hopping between consecutive subframes 4 and 5 and frequency hopping between consecutive subframes 9 and 0.

Embodiment 4:

This embodiment provides a method of frequency hopping. First a tree structure table is defined, where $m_0$ to $m_3$ all denote the number of narrowbands. In practical use, what is used to define a tree structure is not limited to the following table. $m_0$ denotes the number of available narrowbands contained in a system bandwidth. The available narrowbands may be narrowbands obtained after a system bandwidth of a cell is divided according to a preset manner. That is, each system bandwidth corresponds to one available narrowband set. The N is a constant value for a system bandwidth. The present invention does not limit the available narrowbands. The definition of the available narrowbands is also applicable to other embodiments.

Table 4.3.1-1

| System Bandwidth | $m_0$ | $N_0$ | $m_1$ | $N_1$ | $m_2$ | $N_2$ | $m_3$ | $N_3$ |
|---|---|---|---|---|---|---|---|---|
| 20 | 16 | 1 | 8 | 2 | 4 | 2 | 1 | 4 |
| 15 | 12 | 1 | 4 | 3 | 2 | 2 | 1 | 2 |
| 10 | 8 | 1 | 4 | 2 | 2 | 2 | 1 | 2 |
| 5 | 4 | 1 | 2 | 2 | 1 | 2 | | |

The narrowband index of the information or the channel is:

$$n_{NB}(k) = \sum_{b=0}^{B} m_b n_b \qquad (4.3.1\text{-}1)$$

In the above formula, k may be considered as a frequency hopping count, and the value of k may start from a preset value and, preferably, start from 0. For example, if the information is initially transmitted on narrowband 0, then k = 0; after the information is transmitted on narrowband 0 in several subframes, the information is transmitted on another narrowband (i.e., narrowband 1) by way of frequency hopping, and k = 1; after the information is transmitted on narrowband 1 in several subframes, the information is transmitted on another narrowband (i.e., narrowband 2) by way of frequency hopping, and k = 2; and so on. In another example, k = $\lfloor n_f \times 10 + \lfloor n_s/2 \rfloor /Y \rfloor$. Y is a granularity for frequency hopping, which means frequency hopping is performed for every Y subframes. k may also be defined on the basis of available subframes. For example, k = $\lfloor n_t/Y \rfloor$. $n_t$ denotes an index of an available subframe. For example, available subframes of each radio frame are 0, 4, 5, and 9. Available subframes are counted from subframe 0 of radio frame 0, and subframes 0, 4, 5, and 9 of radio frame 0 correspond to available subframe indexes 0, 1, 2, and 3, respectively, and so on.

For a system bandwidth, B is the maximum value of the parameter index corresponding to the system bandwidth described in the above table. For example, if the system bandwidth is 10 MHz, 15 MHz or 20 MHz, then B = 3; and if the System bandwidth is 5 MHz, then B = 2.

$$n_b = \begin{cases} \lfloor c/m_b \rfloor \bmod N_b & b \leq b_{hop} \\ \{F_b(k) + \lfloor n_0/m_b \rfloor\} \bmod N_b & \text{otherwise} \end{cases} \qquad (4.3.1\text{-}2)$$

c is a frequency domain position parameter.
$b_{hop}$ is a constant value, e.g., $b_{hop} = 0$.
$F_b(k)$ is a frequency hopping factor and defined as:

$$F_b(k) = \begin{cases} (N_b/2) \left\lfloor \dfrac{k \bmod \prod_{b'=b_{hop}}^{b} N_{b'}}{\prod_{b'=b_{hop}}^{b-1} N_{b'}} \right\rfloor + \left\lfloor \dfrac{k \bmod \prod_{b'=b_{hop}}^{b} N_{b'}}{2 \prod_{b'=b_{hop}}^{b-1} N_{b'}} \right\rfloor & \text{if } N_b \text{ even} \\ \lfloor N_b/2 \rfloor \left\lfloor k / \prod_{b'=b_{hop}}^{b-1} N_{b'} \right\rfloor & \text{if } N_b \text{ odd} \end{cases} \qquad (4.3.1\text{-}3)$$

The following example illustrates a frequency hopping process. Assuming that c = 0 and the system bandwidth is 20 MHz, $F_b(n_{NB})$ varies with time using the following rules:

$F_0(k)$: always 0
$F_1(k)$: 0, 1, 0, 1, 0, 1, 0, 1, 0, 1, 0, 1, 0, 1, 0, 1, ...
$F_2(k)$: 0, 0, 1, 1, 0, 0, 1, 1, 0, 0, 1, 1, 0, 0, 1, 1, ...
$F_3(k)$: 0, 0, 0, 0, 2, 2, 2, 2, 5, 5, 5, 5, 7, 7, 7, 7, ...
$n_b = F_b(k)$.

Thus the frequency hopping process $n_{NB}(k) = \sum_{b=}^{B} m_b n_b$ is: 0, 8, 4, 12, 2, 10, 6, 14, 1, 9, 5, 13, 3, 11, 7, 15.

It can be seen that frequency hopping has traversed all narrowbands.

Further, c is the frequency domain position parameter. To randomize frequency hopping in different cells, c may be related to a cell identifier (cell-ID). For example, $c = n_{cell\text{-}ID} \bmod m_0$.

Further, the granularity for frequency hopping Y may also be related to the cell-ID. For example, $Y = 10(n_{cell\text{-}ID} \bmod 10)$.

Embodiment 5:

This embodiment is similar to embodiment 4, and is different from embodiment 4 only in that a tree with only two layers is established in this embodiment.

Table 4.3.1-2

| System Bandwidth | $m_0$ | $N_0$ | $m_1$ | $N_1$ |
|---|---|---|---|---|
| 20 | 16 | 1 | 1 | 16 |
| 15 | 12 | 1 | 1 | 12 |
| 10 | 8 | 1 | 1 | 8 |
| 5 | 4 | 1 | 1 | 4 |

$$n_{NB}(k) = \sum_{b=0}^{B} m_b n_b = m_0 n_0 + m_1 n_1 = m_0 n_0 + n_1 \qquad (4.3.1\text{-}4)$$

$$n_0 = \lfloor c/m_0 \rfloor \bmod N_0 = 0 \qquad (4.3.1\text{-}5)$$

Thus the above formula is simplified as:

$$n_{NB}(k) = n_1 \qquad (4.3.1\text{-}6)$$

$$n_1 = \{F_1(k) + \lfloor c/m_1 \rfloor\} \bmod N_1 = (F_1(k) + c) \bmod N_1 \qquad (4.3.1\text{-}7)$$

In the above formula,

$$F_1(k) = \begin{cases} (N_1/2)\left\lfloor \frac{k \bmod (N_0 N_1)}{N_0} \right\rfloor + \left\lfloor \frac{k \bmod (N_0 N_1)}{2N_0} \right\rfloor & \text{if } N_b \text{ even} \\ \lfloor N_1/2 \rfloor \lfloor k/N_0 \rfloor & \text{if } N_b \text{ odd} \end{cases} \qquad (4.3.1\text{-}8)$$

After the above formula is simplified:
if the number N (i.e., mo) of narrowbands for frequency hopping is an odd number,

$$n_{NB}(k)=(\lfloor N/2\rfloor \cdot k + c) \bmod N;$$

if the number N (i.e., mo) of narrowbands for frequency hopping is an even number,

$$n_{NB}(k) = \left((N/2)\lfloor k \bmod N\rfloor + \frac{k \bmod N}{2} + c\right) \bmod N;$$

Assuming that there are a total of 15 narrowbands, N is an odd number and c=0, so
$n_{NB}(k) = (7k+c) \bmod N$,

Thus a frequency hopping process $n_{NB}(k)$ is: 0, 7, 14, 6, 13, 5, 12, 4, 11, 3, 10, 2, 9, 1, 8, 0, ...

Assuming that there are a total of 16 narrowbands, N is an even number and c=0, so

$$n_{NB}(k)=\left((16/2)\left\lfloor\frac{k \bmod 16}{1}\right\rfloor + \left\lfloor\frac{k \bmod 16}{2}\right\rfloor\right) \bmod N$$

$$= \left(8(k \bmod 16) + \left\lfloor\frac{k \bmod 16}{2}\right\rfloor\right) \bmod N.$$

Thus the frequency hopping process $n_{NB}(k)$ is: 0, 8, 1, 9, 2, 10, 3, 11, 4, 12, 5, 13, 6, 14, 7, 15, 0, 8, 1, 9, ...

It can be seen that frequency hopping has traversed all narrowbands.

Further, c is the frequency domain position parameter. To randomize frequency hopping in different cells, c may be related to a cell identifier (cell-ID). For example, $c = n_{cell\text{-}ID} \bmod m_0$.

Further, a granularity for frequency hopping Y may also be related to the cell-ID. For example, $Y = 10(n_{cell\text{-}ID} \bmod 10)$.

Embodiment 6:

This embodiment provides a method of local frequency hopping. This embodiment still uses the tree structure in embodiment 4. A range for frequency hopping of the information or the channel is determined by the parameter $b_{hop}$. The value of $b_{hop}$ may be indicated in a MIB. For example, if the value of $b_{hop}$ is selected from 0 to 2, then the value of $b_{hop}$ is indicated using 2bits in the MIB.

$$n_b = \begin{cases} \lfloor c/m_b \rfloor \bmod N_b & b \leq b_{hop} \\ \{F_b(k) + \lfloor n_0/m_b\rfloor\} \bmod N_b & \text{otherwise} \end{cases}.$$

Regardless of the value $N_b$ in embodiment 4, the formula $N_{b_{hop}}=1$. The calculation of frequency hopping is given below.
$b_{hop} = 1$.

The following example illustrates a frequency hopping process. Assuming that c = 0 and a system bandwidth is 20 MHz, $F_b(n_{SIB1})$ varies with time using the following rules:

$F_0(n_{SIB1})$: always 0
$F_1(n_{SIB1})$: always 0
$F_2(n_{SIB1})$: 0, 0, 1, 1, 0, 0, 1, 1, 0, 0, 1, 1, 0, 0, 1, 1, ...
$F_3(n_{SIB1})$: 0, 0, 2, 2, 5, 5, 7, 7, 0, 0, 2, 2, 5, 5, 7, 7, ...
$n_b = F_b(n_{SIB1})$.

Thus the frequency hopping process $n_{NB}(k)$ is: 0, 4, 2, 6, 1, 5, 3, 7, 0, 4, 2, 6, 1, 5, 3, 7...

It can be seen that frequency hopping has traversed narrowbands 0 to 7.
$b_{hop} = 2$.

The following example illustrates the frequency hopping process. Assuming that $n_{RRC} = 0$ and the system bandwidth is 20 MHz, $F_b(n_{SIB1})$ varies with time using the following rules:

$F_0(n_{SIB1})$: always 0
$F_1(n_{SIB1})$: always 0
$F_2(n_{SIB1})$: always 0
$F_3(n_{SIB1})$: 0, 2, 1, 3, 0, 2, 1, 3, 0, 2, 1, 3, 0, 2, 1, 3, ...
$n_b = F_b(n_{SIB1})$.

Thus the frequency hopping process $n_{NB}(k)$ is: 0, 2, 1, 3, 0, 2, 1, 3, 0, 2, 1, 3, 0, 2, 1, 3, ...
It can be seen that frequency hopping has traversed narrowbands 0 to 3.

Embodiment 7:

This embodiment provides an example of selecting narrowbands for frequency hopping. In this embodiment, frequency hopping between two narrowbands is performed for the information or the channel. For example, for SIB-1, there are N narrowbands and the available narrowbands may be related to a system bandwidth. For example, for a 20 MHz system, there are a total of 16 narrowbands, each narrowband includes 6 PRBs, and positions of the narrowbands are preset. SIB-1 of one cell is sent on two of the narrowbands by way of frequency hopping. That is, the number of narrowbands for frequency hopping of one cell is two. Assume that narrowbands used for frequency hopping of SIB-1 of one cell are narrowband $n_{NB,\,0}$ and narrowband $n_{NB,\,1}$. Narrowband $n_{NB,\,0}$ and narrowband $n_{NB,\,1}$ are calculated using the following formulas:

$$n_{NB,\,0} = m'\bmod N,$$

$$n_{NB,\,1} = (m_0 + \lfloor m'/N \rfloor + 1)\bmod N \qquad\qquad (4.4\text{-}1)$$

m' is a fixed number. Preferably, m' is related to a cell identifier. Specifically:

$$m' = N_{ID}^{cell} + q(q+1)/2, \quad q = \left\lfloor \frac{N_{ID}^{cell} + q'(q'+1)/2}{30} \right\rfloor, \quad q' = \left\lfloor N_{ID}^{cell}/(N\text{-}1) \right\rfloor.$$

One effect of this method is that the probability that different cell groups use the same pair of narrowbands to undergo frequency hopping is minimal.

Embodiment 8:

This embodiment provides an example of selecting narrowbands for frequency hopping for the information or the channel. Assuming that the number of available narrowbands for a certain system bandwidth is M, the indexes are 0, 1, ..., M - 1, and the the available narrowbands may be related to the system bandwidth. For example, for a 20 MHz system, there are a total of 16 narrowbands, each narrowband includes 6 PRBs, and positions of the narrowbands are preset. SIB-1 of one cell is sent on two of the narrowbands by way of frequency hopping. That is, the number of narrowbands for frequency hopping of one cell is two. For a given cell, the number of narrowbands used for frequency hopping of the information or channel is N. For this given cell, assuming that the ID of the cell is $N_{ID}^{cell}$, indexes of the above N narrowbands for frequency hopping may be determined by the following method:

Narrowband 0: $g_0 = \left(N_{ID}^{cell} + C\right)\bmod M$, where C is an integer constant and may be 0;

Narrowband 1: $g_1 = \left(g_0 + \left\lfloor \frac{M}{N} \right\rfloor\right)\bmod M$;

Narrowband 2: $g_2 = \left(g_0 + 2\left\lfloor \frac{M}{N} \right\rfloor\right)\bmod M$;

Narrowband g: $g_n = \left(g_0 + n\cdot\left\lfloor \frac{M}{N} \right\rfloor\right)\bmod M$;

$$\text{Narrowband } N-1: g_{N-1} = \left(g_0 + (N-1)\cdot \left\lfloor \frac{M}{N} \right\rfloor \right) \bmod M .$$

The above method can not only ensure the intervals between narrowbands for frequency hopping in the frequency domain (thereby ensuring the frequency hopping gain), but can also avoid conflicts between narrowbands selected by cells, thus reducing SIB-1 signal transmission interference between cells.

The method of frequency hopping is not limited in this embodiment.

Embodiment 9:

This embodiment provides an example of a frequency hopping pattern, which is specifically described as follows:

A frequency hopping sequence of the frequency hopping pattern satisfies $n_{NB}(k) = \left(g_0 + \left\lfloor \frac{M}{N} \right\rfloor \cdot h(k)\right) \bmod M$ .

$$g_0 = \left(N_{ID}^{cell} + C\right) \bmod M.$$

$N_{ID}^{cell}$ denotes a cell identifier, C denotes a preset value, M denotes a number of available narrowbands, N denotes a number of narrowbands for frequency hopping, and h(k) denotes a preselected function.

Here, h(k) is a random function, or a random function modulo N, which is similar to the random sequence in embodiment 2. The random function is obtained from at least one of initialized cell identifier, radio frame number and subframe number.

k is a frequency hopping count that is determined by at least one of the physical radio frame number, the subframe number and the cell identifier, e.g., $k = \left(10^* n_{wf} + n_{sf} + N_{ID}^{cell}\right) \bmod Y$ or $k = \left(n_{wf} + N_{ID}^{cell}\right) \bmod Y$ .

Embodiment 10:

This embodiment provies an example of determination of available subframes, which is specifically described as follows:

Subframes for sending the channel/the information may be preset. For example, the subframes for sending the channel/the information may be physical subframes {4, 5} of all physical radio frames. Alternatively, the subframes for sending the channel/the information may be determined by a cell identifier. For example, a standard specifies that the number of transmission subframes in a radio frame is 2, then it is determined, according to the cell identifier, which two available subframes are used by a cell. Assuming that 2 subframes are selected from {0, 4, 5, 9}. There are six options, i.e., {0, 4}, {0, 5}, {0, 9}, {4, 5}, {4, 9} and {5, 9}. The 6 options are numbered using indexes 0 to 5. So the index of the option for each cell is $n = \left(N_{ID}^{cell}\right) \bmod 6$ .

Alternatively, in view that consecutive subframes are used as available subframes, there are a total of 2 options, i.e., {4, 5} and {0, 9}. These two options are numbered using indexes 0 and 1, so the index of the option of the cell is

$$n = \left(N_{ID}^{cell}\right) \bmod 2 .$$

Embodiment 11:

This embodiment provides an example of selecting narrowbands for frequency hopping, which is specifically described as follows:

In this embodiment, there are M available narrowbands for the information or the channel. The indexes of the M narrowbands are 0, 1, ..., M - 1. The M narrowbands are divided into one or at least two sets of narrowbands for frequency hopping in a preset manner. The number of narrowbands for frequency hopping in each set is N. N may be a constant value for all sets of narrowbands for frequency hopping. For example, there are 2 narrowbands in each set of narrowbands for frequency hopping. Alternatively, different sets of narrowbands for frequency hopping may contain different numbers of narrowbands for frequency hopping. For example, some sets of narrowbands each contains 2 narrowbands and some sets of narrowbands each contains 3 narrowbands. Each set of narrowbands for frequency hopping corresponds to one index. An index of a narrowband for frequency hopping for the information or the channel is determined by a cell identifier.

For example, for a 20 MHz system, there are 16 available narrowbands for SIB-1 transmission, and indexes of the 16 available narrowbands are 0, 1, 2, ..., 15. The 16 narrowbands are classified into 8 sets of narrowbands for frequency hopping: {0, 8}, {1, 9}, {2, 10}, {3, 11}, {4, 12}, {5, 13}, {6,14} and {7,15}. Indexes of these eight sets are 0, 1, 2, ..., 7. An index of a set of narrowband for frequency hopping for SIB-1 transmission of a cell is determined by a cell identifier, e.g., $n = \left( N_{ID}^{cell} \right) \bmod 8$.

In another example, assuming that there are M available narrowbands for the information or the channel, and there are N narrowbands for frequency hopping for the information or the channel, then the available narrowbands are divided into [M/N] sets of narrowbands for frequency hopping, and a interval between indexes of the narrowbands in each set is [M/N]. For example, there are 16 available narrowbands for SIB-1 transmission, and indexes of the 16 available narrowbands are 0, 1, 2, ..., 15. Assuming N = 4, a interval between indexes of the narrowbands in each set is 4, the number of sets is also 4, the sets are {0, 4, 8, 12}, {1, 5, 9, 13}, {2, 6, 10, 14} and {3, 7, 11, 14}, and the indexes may be numbered as 0, 1, 2 and 3. An index of a set of narrowbands for frequency hopping for SIB-1 transmission of a cell is determined by a cell identifier, e.g., $n = \left( N_{ID}^{cell} \right) \bmod 8$.

In the above examples, the sets of narrowbands for frequency hopping do not overlap with each other. In practical use, the sets of narrowbands for frequency hopping may overlap with each other. For example, assuming that there are 6 available narrowbands with indexes 0, 1, 2 and 3. The 4 narrowbands are classified into 6 sets of narrowbands for frequency hopping: {0, 1}, {0, 2}, {0, 3}, {1, 2}, {1, 3} and {2, 3}. An index of a set of narrowband for frequency hopping for SIB-1 transmission of a cell is determined by a cell identifier, e.g., $n = \left( N_{ID}^{cell} \right) \bmod 6$.

FIG. 5 is a structural diagram of an information transmission apparatus according to the present invention. The apparatus shown in FIG. 5 includes:

> an acquisition module, which is configured to acquire a frequency hopping pattern; and
> a sending module, which is configured to send information or a channel on available subframes according to the frequency hopping pattern, where a time-domain granularity for frequency hopping of the frequency hopping pattern is determined by the available subframes.

The time-domain granularity for frequency hopping of the frequency hopping pattern is determined by the available subframes in the following modes:

> mode a: if the available subframes are subframes {0, 4, 5, 9} in designated radio frames or two subframes of the subframes {0, 4, 5, 9} in the designated radio frames, then the time-domain granularity for frequency hopping is Y = 2f available subframes or the time-domain granularity for frequency hopping is Y = 5f physical subframes;
> mode b: if the available subframes are three subframes of the subframes {0, 4, 5, 9} in the designated radio frames, then the time-domain granularity for frequency hopping is Y = 3f available subframes or the time-domain granularity for frequency hopping is Y = 10f physical subframes;
> mode c: if the available subframes are one subframe of the subframes {0, 4, 5, 9} in the designated radio frames, then the time-domain granularity for frequency hopping is Y available subframes or the time-domain granularity for frequency hopping is Y = 10f physical subframes; and
> mode d: if the available subframes are m subframes of subframes {0, 4, 5, 9} of one radio frame in the designated radio frames, then a time-domain granularity for frequency hopping on the radio frame is Y = m available subframes or the time-domain granularity for frequency hopping on the radio frame is Y = 10f physical subframes, where $1 \leq m \leq 4$ and m is an integer,
> f is a predefined positive integer.

The value f is determined by at least one of a cell identifier and a system bandwidth.
The mode a further includes:

> if the available subframes are subframes {4, 5} in the designated radio frames, then a subframe 4 and a subframe 5 of one radio frame in the designated radio frames correspond to a same narrowband;
> if the available subframes are subframes {0, 9} in the designated radio frames, then a subframe 9 of one radio frame in the designated radio frames and a subframe 0 of a next radio frame of the radio frame correspond to a same narrowband;

if the available subframes are the subframes {0, 4, 5, 9} in the designated radio frames, the mode a includes one of the following modes:

mode a1:
a subframe 4, a subframe 5 and a subframe 9 of one radio frame in the designated radio frames and a subframe 0 of a next radio frame of the radio frame correspond to a same narrowband;
mode a2:
a subframe 9 of one radio frame in the designated radio frames and a subframe 0, a subframe 4 and a subframe 5 of a next radio frame of the radio frame correspond to a same narrowband;
mode a3:
a subframe 4 and a subframe 5 of one radio frame in the designated radio frames correspond to a same narrowband, and a subframe 9 of one radio frame in the designated radio frames and a subframe 0 of a next radio frame of the radio frame correspond to a same narrowband.

If the available subframes are the subframes {4, 5} in the designated radio frames and the time-domain granularity for frequency hopping is Y = 2f available subframes or Y = 10f physical subframes, then a subframe 4 of an ith radio frame in the designated radio frames through a subframe 5 of an (i + f - 1)th radio frame in the designated radio frames correspond to a same narrowband;

if the available subframes are the subframes {0, 9} in the designated radio frames and the time-domain granularity for frequency hopping is Y = 2f available subframes or Y = 10f physical subframes, then a subframe 9 of the ith radio frame in the designated radio frames through a subframe 0 of an (i + f)th radio frame in the designated radio frames correspond to a same narrowband;
if the available subframes are the subframes {0, 4, 5, 9} in the designated radio frames and the time-domain granularity for frequency hopping is Y = 2f available subframes or Y = 5f physical subframes, the following modes are included:
mode a1:
if f is an even number, the subframe 4 of the ith radio frame in the designated radio frames through a subframe 0 of an (i + f/2)th radio frame in the designated radio frames correspond to a same narrowband;
mode a2:
if f is an even number, the subframe 9 of the ith radio frame in the designated radio frames through a subframe 5 of the (i + f/2)th radio frame in the designated radio frames correspond to a same narrowband;
mode a3:
if f is an odd number, the subframe 4 of the ith radio frame in the designated radio frames through the subframe 5 of the (i + $_\lfloor$f/2$_\rfloor$)th radio frame in the designated radio frames correspond to a same narrowband, and a subframe 9 of the (i + [f/2])th radio frame in the designated radio frames through the subframe 0 of the (i + f)th radio frame in the designated radio frames correspond to a same narrowband.

The ith radio frame is preset, and i is a positive integer.
The mode b further includes:

if the available subframes are subframes {0, 4, 5} in the designated radio frames, then a subframe 4 and a subframe 5 of one radio frame in the designated radio frames and a subframe 0 of a next radio frame of the radio frame correspond to a same narrowband, or a subframe 0, a subframe 4 and a subframe 5 of one radio frame in the designated radio frames correspond to a same narrowband;

if the available subframes are subframes {0, 4, 9} in the designated radio frames, then a subframe 9 of one radio frame in the designated radio frames and a subframe 0 and a subframe 4 of a next radio frame of the radio frame correspond to a same narrowband, or a subframe 4 and a subframe 9 of one radio frame in the designated radio frames and a subframe 0 of a next radio frame of the radio frame correspond to a same narrowband;

if the available subframes are subframes {0, 5, 9} in the designated radio frames, then a subframe 9 of one radio frame in the designated radio frames and a subframe 0 and a subframe 5 of a next radio frame of the radio frame correspond to a same narrowband, or a subframe 5 and a subframe 9 of one radio frame in the designated radio frames and a subframe 0 of a next radio frame of the radio frame correspond to a same narrowband; and

if the available subframes are subframes {4, 5, 9} in the designated radio frames, then a subframe 4, a subframe 5 and a subframe 9 of one radio frame in the designated radio frames correspond to a same narrowband, or a subframe 5 and a subframe 9 of one radio frame in the designated radio frames and a subframe 4 of a next radio frame of the radio frame correspond to a same narrowband.

If the available subframes are subframes {0, 4, 5} in the designated radio frames and the time-domain granularity for frequency hopping is Y = 3f available subframes or Y = 10f physical subframes, then a subframe 4 of an ith radio frame in the designated radio frames through a subframe 0 of an (i + f)th radio frame in the designated radio frames correspond to a same narrowband, or a subframe 0 of the ith radio frame in the designated radio frames through a subframe 5 of an (i + f - 1)th radio frame in the designated radio frames correspond to a same narrowband;

if the available subframes are subframes {0, 4, 9} in the designated radio frames and the time-domain granularity for frequency hopping is Y = 3f available subframes or Y = 10f physical subframes, then a subframe 9 of the ith radio frame in the designated radio frames through a subframe 4 of the (i + f)th radio frame in the designated radio frames correspond to a same narrowband, or the subframe 4 of the ith radio frame in the designated radio frames through the subframe 0 of the (i + f)th radio frame in the designated radio frames correspond to a same narrowband;

if the available subframes are subframes {0, 5, 9} in the designated radio frames and the time-domain granularity for frequency hopping is Y = 3f available subframes or Y = 10f physical subframes, then the subframe 9 of the ith radio frame in the designated radio frames through a subframe 5 of the (i + f)th radio frame in the designated radio frames correspond to a same narrowband, or a subframe 5 of the ith radio frame in the designated radio frames through the subframe 0 of the (i + f)th radio frame in the designated radio frames correspond to a same narrowband;

if the available subframes are subframes {4, 5, 9} in the designated radio frames and the time-domain granularity for frequency hopping is Y = 3f available subframes or Y = 10f physical subframes, then the subframe 9 of the ith radio frame in the designated radio frames through the subframe 5 of the (i + f)th radio frame in the designated radio frames correspond to a same narrowband, or the subframe 4 of the ith radio frame in the designated radio frames through a subframe 9 of the (i + f - 1)th radio frame in the designated radio frames correspond to a same narrowband;

the ith radio frame is preset, and i is a positive integer.

The value of the serial number i is determined by at least one of a cell identifier, a system bandwidth, the time-domain granularity for frequency hopping, a radio frame index and a subframe index.
The next radio frame of the radio frame is a radio frame next to the radio frame in the designated radio frames.
The mode c or the mode d further includes:
when a physical subframe index of a last available subframe of one radio frame in the designated radio frames is h, a physical subframe index of a first available radio frame of a next radio frame of the one radio frame in the designated radio frames is not equal to (h + 1) mod 10, where h = 0, 1, 2, ..., 8, 9.
The time-domain granularity for frequency hopping of the frequency hopping pattern is determined by the available subframes in the following modes:

mode a: if the available subframes are subframes {0, 1, 5, 6} in designated radio frames or two subframes of the subframes {0, 1, 5, 6} in the designated radio frames, then the time-domain granularity for frequency hopping is Y = 2f available subframes or the time-domain granularity for frequency hopping is Y = 5f physical subframes;

mode b: if the available subframes are three subframes of the subframes {0, 1, 5, 6} in the designated radio frames, then the time-domain granularity for frequency hopping is Y = 3f available subframes or the time-domain granularity for frequency hopping is Y = 10f physical subframes;

mode c: if the available subframes are one subframe of the subframes {0, 1, 5, 6} in the designated radio frames, then the time-domain granularity for frequency hopping is Y available subframes or the time-domain granularity for frequency hopping is Y = 10f physical subframes; and

mode d: if the available subframes are m subframes of subframes {0, 1, 5, 6} of one radio frame in the designated radio frames, then a time-domain granularity for frequency hopping on the radio frame is Y = m, the time-domain granularity for frequency hopping corresponding to available subframes, or the time-domain granularity for frequency hopping on the radio frame is Y = 10f, the time-domain granularity for frequency hopping corresponding to physical subframes, where $1 \leq m \leq 4$ and m is an integer,

f is a predefined positive integer.

The mode a further includes:

if the available subframes are subframes {0, 1} in the subframes {0, 1, 5, 6} in the designated radio frames, then a subframe 0 and a subframe 1 of one radio frame in the designated radio frames correspond to a same narrowband;

if the available subframes are subframes {5, 6} in the subframes {0, 1, 5, 6} in the designated radio frames, then a subframe 5 and a subframe 6 of one radio frame in the designated radio frames correspond to a same narrowband;

if the available subframes are the subframes {0, 1, 5, 6} in the designated radio frames, one of the following modes is included:

a subframe 0, a subframe 1, a subframe 5 and a subframe 6 of one radio frame in the designated radio frames correspond to a same narrowband;

a subframe 5 and a subframe 6 of one radio frame in the designated radio frames and a subframe 0 and a subframe 1 of a next radio frame of the radio frame correspond to a same narrowband;

a subframe 0 and a subframe 1 of one radio frame in the designated radio frames correspond to a same narrowband, and a subframe 5 and a subframe 6 of one radio frame in the designated radio frames correspond to a same narrowband.

If the available subframes are the subframes {0, 1} in the designated radio frames and the time-domain granularity for frequency hopping is Y = 2f available subframes or Y = 5f physical subframes, then a subframe 0 of an ith radio frame in the designated radio frames through a subframe 1 of an (i + f - 1)th radio frame in the designated radio frames correspond to a same narrowband;

if the available subframes are the subframes {5, 6} in the designated radio frames and the time-domain granularity for frequency hopping is Y = 2f available subframes or Y = 5f physical subframes, then a subframe 5 of the ith radio frame in the designated radio frames through a subframe 6 of the (i + f - 1)th radio frame in the designated radio frames correspond to a same narrowband;

if the available subframes are the subframes {0, 1, 5, 6} in the designated radio frames and the time-domain granularity for frequency hopping is Y = 2f available subframes or Y = 5f physical subframes, the following modes are included:

mode a1:
if f is an even number, the subframe 0 of the ith radio frame in the designated radio frames through a subframe 6 of an (i + f/2 - 1)th radio frame in the designated radio frames correspond to a same narrowband;
mode a2:
if f is an even number, the subframe 5 of the ith radio frame in the designated radio frames through a subframe 1 of an (i + f/2)th radio frame in the designated radio frames correspond to a same narrowband;
mode a3:
if f is an odd number, the subframe 0 of the ith radio frame in the designated radio frames through the subframe 1 of the (i + [f/2])th radio frame in the designated radio frames correspond to a same narrowband, and a subframe 5 of the (i + [f/2])th radio frame in the designated radio frames through the subframe 6 of the (i + f - 1)th radio frame in the designated radio frames correspond to a same narrowband,
the ith radio frame is preset, and i is a positive integer.

The mode b further includes:

if the available subframes are subframes {0, 1, 5} in the designated radio frames, then a subframe 5 of one radio frame in the designated radio frames and a subframe 0 and a subframe 1 of a next radio frame of the radio frame correspond to a same narrowband, or a subframe 0, a subframe 1 and a subframe 5 of one radio frame in the designated radio frames correspond to a same narrowband;

if the available subframes are subframes {0, 1, 6} in the designated radio frames, then a subframe 6 of one radio frame in the designated radio frames and a subframe 0 and a subframe 1 of a next radio frame of the radio frame correspond to a same narrowband, or a subframe 0, a subframe 1 and a subframe 6 of one radio frame in the designated radio frames correspond to a same narrowband;

if the available subframes are subframes {0, 5, 6} in the designated radio frames, then a subframe 5 and a subframe 6 of one radio frame in the designated radio frames and a subframe 0 of a next radio frame of the radio frame correspond to a same narrowband, or a subframe 0, a subframe 5 and a subframe 6 of one radio frame in the designated radio frames correspond to a same narrowband; and

if the available subframes are subframes {1, 5, 6} in the designated radio frames, then a subframe 1, a subframe 5 and a subframe 6 of one radio frame in the designated radio frames correspond to a same narrowband, or a subframe 5 and a subframe 6 of one radio frame in the designated radio frames and a subframe 1 of a next radio frame of the radio frame correspond to a same narrowband.

The mode b further includes the following modes:

if the available subframes are the subframes {0, 1, 5} in the designated radio frames and the time-domain granularity for frequency hopping is $Y = 3f$ available subframes or $Y = 10f$ physical subframes, then a subframe 0 of an ith radio frame in the designated radio frames through a subframe 5 of an (i + f - 1)th radio frame in the designated radio frames correspond to a same narrowband, or a subframe 5 of the ith radio frame in the designated radio frames through a subframe 1 of an (i + f)th radio frame in the designated radio frames correspond to a same narrowband;

if the available subframes are the subframes {0, 1, 6} in the designated radio frames and the time-domain granularity for frequency hopping is $Y = 3f$ available subframes or $Y = 10f$ physical subframes, then the subframe 0 of the ith radio frame in the designated radio frames through a subframe 6 of the (i + f - 1)th radio frame in the designated radio frames correspond to a same narrowband, or a subframe 6 of the ith radio frame in the designated radio frames through the subframe 1 of the (i + f)th radio frame in the designated radio frames correspond to a same narrowband;

if the available subframes are the subframes {0, 5, 6} in the designated radio frames and the time-domain granularity for frequency hopping is $Y = 3f$ available subframes or $Y = 10f$ physical subframes, then the subframe 0 of the ith radio frame in the designated radio frames through the subframe 6 of the (i + f - 1)th radio frame in the designated radio frames correspond to a same narrowband, or the subframe 5 of the ith radio frame in the designated radio frames through a subframe 0 of the (i + f)th radio frame in the designated radio frames correspond to a same narrowband; and

if the available subframes are the subframes {1, 5, 6} in the designated radio frames and the time-domain granularity for frequency hopping is $Y = 3f$ available subframes or $Y = 10f$ physical subframes, then a subframe 1 of the ith radio frame in the designated radio frames through the subframe 6 of the (i + f - 1)th radio frame in the designated radio frames correspond to a same narrowband, or the subframe 5 of the ith radio frame in the designated radio frames through the subframe 1 of the (i + f)th radio frame in the designated radio frames correspond to a same narrowband,

the ith radio frame is preset, and i is a positive integer.

The value of the serial number i is determined by at least one of a cell identifier, a system bandwidth, the time-domain granularity for frequency hopping, a radio frame index and a subframe index.

The mode c or the mode d further includes:

when a physical subframe index of a last available subframe of one radio frame in the designated radio frames is h, a physical subframe index of a first available radio frame of a next radio frame of the one radio frame in the designated radio frames is not equal to (h + 1) mod 10, where h = 0, 1, 2, ..., 8, 9.

A frequency hopping sequence in the frequency hopping pattern is determined by one of the following:

a preset hash function; and
a preset pseudo-random sequence.

The preset hash function and/or the preset pseudo-random sequence includes:

The preset hash function and/or the preset pseudo-random sequence is determined by a cell identifier.

The frequency hopping sequence is determined by a preset number of consecutive bits in the pseudo-random sequence.

The frequency hopping sequence of the frequency hopping pattern satisfies $H_k = Y_k \bmod N$,

where $Y_k = AY_{k-1} \bmod D$,

where $Y_{-1} = N_{ID}^{cell} + 1$ , k denotes a frequency hopping count, A and D denote preset values, $N_{ID}^{cell}$ denotes a cell identifier and N denotes a number of narrowbands for frequency hopping.

A frequency hopping sequence of the frequency hopping pattern satisfies $n_{NB}(k) = \left( g_0 + \left\lfloor \frac{M}{N} \right\rfloor \cdot h(k) \right) \bmod M$ , where

$$g_0 = \left( N_{ID}^{cell} + C \right) \bmod M,$$

$N_{ID}^{cell}$ denotes a cell identifier, C denotes a preset value, M denotes a number of available narrowbands, N denotes a number of narrowbands for frequency hopping and h(k) denotes a preselected function.

The function h(k) is obtained from at least one of the cell identifier, a radio frame number and a subframe number.

The frequency hopping sequence of the frequency hopping pattern satisfies:

$$n_{NB}(k) = ( \lfloor N/2 \rfloor \cdot k + c) \bmod N; \text{ or}$$

$$n_{NB}(k) = ((N/2) \lfloor k \bmod N \rfloor + \left\lfloor \frac{k \bmod N}{2} \right\rfloor + c) \bmod N,$$

where k denotes a frequency hopping count, N denotes a number of narrowbands for frequency hopping and c denotes a preset value.

The frequency hopping pattern satisfies $H_{n_{rf}, n_{sf}} = ( \sum_{i=0}^{U} c(W+i) \cdot 2^i ) \bmod N$ .

$n_{rf}$ denotes a radio frame index, $n_{sf}$ denotes a subframe index, U denotes a difference between the number of the consecutive bits and one, and N denotes a number of narrowbands for frequency hopping; and c(i) denotes a predefined pseudo-random sequence determined by at least one of a cell identifier, the radio frame index and the subframe index.

W is determined by at least one of the following modes:

$$W = 4(U+1)n_{rf} + (U+1)n_{sw};$$

$$W = 4(U+1)n_{rf} + (U+1)n_{sf};$$

$$W = 2(U+1)n_{rf} + (U+1)\left\lfloor \frac{n_{sw}}{2} \right\rfloor;$$

$$W = 2(U+1)n_{rf} + (U+1)\left\lfloor \frac{n_{sf}}{5} \right\rfloor;$$

$$W = 2(U+1)n_{rf} + (U+1)\left\lfloor \frac{n_{sw}+\Delta_1}{2} \right\rfloor;$$

and

$$W = 2(U{+}1)n_{rf} + (U{+}1)\left\lfloor\frac{n_{sf}+\Delta_2}{2}\right\rfloor,$$

$$n_{sw} = 2\left\lfloor\frac{n_{sf}}{5}\right\rfloor + \frac{n_{sf} \bmod 5}{4},$$

and $\Delta_1$ and $\Delta_2$ are predefined integers.

The parameter c is determined by a cell identifier.

The narrowbands for frequency hopping and/or the number of the narrowbands for frequency hopping in the frequency hopping pattern is preset or notified by an eNB.

The narrowbands for frequency hopping and/or the number of the narrowbands for frequency hopping in the frequency hopping pattern is notified by the eNB as follows:

when the information is a SIB-1, narrowbands for frequency hopping and/or the number of the narrowbands for frequency hopping in the frequency hopping pattern of the SIB-1, which is sent in a MIB by the eNB, is received.

The narrowbands for frequency hopping and/or the number of the narrowbands for frequency hopping in the frequency hopping pattern is preset as follows:

the narrowbands for frequency hopping and/or the number of the narrowbands for frequency hopping is determined by a cell identifier and/or a system bandwidth, or

an index of a set of the narrowbands for frequency hopping is determined by the cell identifier and/or the system bandwidth.

When the number of the narrowbands for frequency hopping in the frequency hopping pattern is two, the two narrowbands for frequency hopping satisfy:

$m_0 = m'$ mod M, and

$$m_1 = (m_0 + \lfloor m'/M\rfloor + 1) \bmod M,$$

where $m' = N_{ID}^{cell} + q(q{+}1)/2$, $q = \left\lfloor\dfrac{N_{ID}^{cell}+q'(q'{+}1)/2}{30}\right\rfloor$, $q' = \left\lfloor N_{ID}^{cell}/(N{-}1)\right\rfloor$, M denotes a number of available narrowbands, and $N_{ID}^{cell}$ denotes the cell identifier.

The narrowbands for frequency hopping and/or the number of the narrowbands for frequency hopping is determined by the cell identifier as follows:

the number of the narrowbands for frequency hopping in the frequency hopping pattern is N, and an index of the N narrowbands for frequency hopping satisfies:

$$g_0 = \left(N_{ID}^{cell}+C\right) \bmod M;$$

and

$$g_n = \left(g_0 + n\cdot\left\lfloor\frac{M}{N}\right\rfloor\right) \bmod M,$$

where $1 \le n \le N - 1$,

C denotes a preset integer, $N_{ID}^{cell}$ denotes the cell identifier, M denotes a number of available narrowbands, and n denotes an integer.

The available subframes are determined by a cell identifier.

The frequency hopping count is determined by at least one of the cell identifier, a radio frame index and a subframe index.

The narrowbands for frequency hopping are narrowbands used to send the information or a channel in a cell by way of frequency hopping.

The available narrowbands are narrowbands predefined on a system bandwidth of a cell.

In this embodiment of the present invention, the steps of acquiring a frequency hopping pattern and sending information or a channel on available subframes according to the frequency hopping pattern can implement frequency hopping for repeated channels.

Optionally, for specific examples in this embodiment, reference may be made to the examples described in the above embodiments and optional embodiments, and the specific examples will not be repeated in this embodiment.

Apparently, those skilled in the art should know that each above-mentioned module or step of the present invention may be implemented by a universal computing device, they may be concentrated on a single computing device or distributed in a network formed by multiple computing devices, and alternatively, they may be implemented by program codes executable by the computing devices, so that they may be stored in a storage device for execution by the computing devices, and in some circumstances, the illustrated or described steps may be executed in sequences different from those described herein, or they may be made into various integrated circuit modules separately, or multiple modules or steps therein may be made into a single integrated circuit module for implementation. Therefore, the present invention is not limited to any specific combination of hardware and software.

The above are only preferred embodiments of the present invention and are not intended to limit the present invention, and for those skilled in the art, the present application may have various modifications and variations falling within the scope of the present claims.

## INDUSTRIAL APPLICABILITY

Through embodiments of the present invention, the steps of acquiring a frequency hopping pattern and sending information or a channel on available subframes according to the frequency hopping pattern, where a time-domain granularity for frequency hopping of the frequency hopping pattern is determined by the available subframes, can implement frequency hopping for repeated channels.

## Claims

1. An information transmission method comprising:

    acquiring a frequency hopping pattern; and
    sending information or a channel on a plurality of available subframes according to the frequency hopping pattern, wherein a time-domain granularity for frequency hopping of the frequency hopping pattern is determined by the available subframes,
    wherein the time-domain granularity for frequency hopping of the frequency hopping pattern is determined by the available subframes in one of the following modes:

        mode a: when the available subframes are subframes {0, 4, 5, 9} in designated radio frames or two subframes of the subframes {0, 4, 5, 9} in the designated radio frames,

            the time-domain granularity for frequency hopping is Y = 2f available subframes, or
            the time-domain granularity for frequency hopping is Y = 5f physical subframes;

        mode b: when the available subframes are three subframes of the subframes {0, 4, 5, 9} in the designated radio frames,

            the time-domain granularity for frequency hopping is Y = 3f available subframes, or
            the time-domain granularity for frequency hopping is Y = 10f physical subframes;

        mode c: when the available subframes are one subframe of the subframes {0, 4, 5, 9} in the designated radio frames,

the time-domain granularity for frequency hopping is Y available subframes, or
the time-domain granularity for frequency hopping is Y = 10f physical subframes; and

mode d: when the available subframes are m subframes of subframes {0, 4, 5, 9} of one radio frame in the designated radio frames,

the time-domain granularity for frequency hopping on the one radio frame is Y = m available subframes, or
the time-domain granularity for frequency hopping on the one radio frame is Y = 10f physical subframes, wherein $1 \leq m \leq 4$ and m is an integer,

wherein f is a predefined positive integer, and wherein Y is an integer equal to or greater than 1.

2. The method of claim 1, wherein the mode a further comprises:

when the available subframes are subframes {4, 5} in the designated radio frames, a subframe 4 and a subframe 5 of one radio frame in the designated radio frames correspond to a same narrowband;
when the available subframes are subframes {0, 9} in the designated radio frames, a subframe 9 of one radio frame in the designated radio frames and a subframe 0 of a next radio frame of the one radio frame correspond to a same narrowband; and
when the available subframes are the subframes {0, 4, 5, 9} in the designated radio frames, the mode a comprises one of the following modes:

mode a1: a subframe 4, a subframe 5 and a subframe 9 of one radio frame in the designated radio frames and a subframe 0 of a next radio frame of the one radio frame correspond to a same narrowband;
mode a2: a subframe 9 of one radio frame in the designated radio frames and a subframe 0, a subframe 4 and a subframe 5 of a next radio frame of the one radio frame correspond to a same narrowband; and
mode a3: a subframe 4 and a subframe 5 of one radio frame in the designated radio frames correspond to a same narrowband, and a subframe 9 of the one radio frame in the designated radio frames and a a subframe 0 of a next radio frame of the one radio frame correspond to a same narrowband.

3. The method of claim 1 or 2, wherein

when the available subframes are the subframes {4, 5} in the designated radio frames and the time-domain granularity for frequency hopping is Y = 2f available subframes or Y = 10f physical subframes, a subframe 4 of an ith radio frame in the designated radio frames through a subframe 5 of an (i + f- 1)th radio frame in the designated radio frames correspond to a same narrowband;
when the available subframes are the subframes {0, 9} in the designated radio frames and the time-domain granularity for frequency hopping is Y = 2f available subframes or Y = 10f physical subframes, a subframe 9 of the ith radio frame in the designated radio frames through a subframe 0 of an (i + f)th radio frame in the designated radio frames correspond to a same narrowband; and
when the available subframes are the subframes {0, 4, 5, 9} in the designated radio frames and the time-domain granularity for frequency hopping is Y = 2f available subframes or Y = 5f physical subframes, the following modes are comprised:

mode a1: when f is an even number, the subframe 4 of the ith radio frame in the designated radio frames through a subframe 0 of an (i + f/2)th radio frame in the designated radio frames correspond to a same narrowband;
mode a2: when f is an even number, the subframe 9 of the ith radio frame in the designated radio frames through a subframe 5 of the (i + f/2)th radio frame in the designated radio frames correspond to a same narrowband; and
mode a3: when f is an odd number, the subframe 4 of the ith radio frame in the designated radio frames through the subframe 5 of the (i + [f/2])th radio frame in the designated radio frames correspond to a same narrowband, and a subframe 9 of the (i + [f/2])th radio frame in the designated radio frames through the subframe 0 of the (i + f)th radio frame in the
designated radio frames correspond to a same narrowband,

wherein the ith radio frame is preset, and i is a positive integer.

4. The method of claim 1, wherein the mode b further comprises:

when the available subframes are subframes {0, 4, 5} in the designated radio frames,

a subframe 4 and a subframe 5 of one radio frame in the designated radio frames and a subframe 0 of a next radio frame of the one radio frame correspond to a same narrowband, or
a subframe 0, a subframe 4 and a subframe 5 of one radio frame in the designated radio frames correspond to a same narrowband;

when the available subframes are subframes {0, 4, 9} in the designated radio frames,

a subframe 9 of one radio frame in the designated radio frames and a subframe 0 and a subframe 4 of a next radio frame of the one radio frame correspond to a same narrowband, or
a subframe 4 and a subframe 9 of one radio frame in the designated radio frames and a subframe 0 of a next radio frame of the one radio frame correspond to a same narrowband;

when the available subframes are subframes {0, 5, 9} in the designated radio frames,

a subframe 9 of one radio frame in the designated radio frames and a subframe 0 and a subframe 5 of a next radio frame of the one radio frame correspond to a same narrowband, or
a subframe 5 and a subframe 9 of one radio frame in the designated radio frames and a subframe 0 of a next radio frame of the one radio frame correspond to a same narrowband; and

when the available subframes are subframes {4, 5, 9} in the designated radio frames,

a subframe 4, a subframe 5 and a subframe 9 of one radio frame in the designated radio frames correspond to a same narrowband, or
a subframe 5 and a subframe 9 of one radio frame in the designated radio frames and a subframe 4 of a next radio frame of the one radio frame correspond to a same narrowband.

5. The method of claim 1 or 3, wherein

when the available subframes are subframes {0, 4, 5} in the designated radio frames and the time-domain granularity for frequency hopping is Y = 3f available subframes or Y = 10f physical subframes,

a subframe 4 of an ith radio frame in the designated radio frames through a subframe 0 of an (i + f)th radio frame in the designated radio frames correspond to a same narrowband, or
a subframe 0 of the ith radio frame in the designated radio frames through a subframe 5 of an (i + f- 1)th radio frame in the designated radio frames correspond to a same narrowband;

when the available subframes are subframes {0, 4, 9} in the designated radio frames and the time-domain granularity for frequency hopping is Y = 3f available subframes or Y = 10f physical subframes,
a subframe 9 of the ith radio frame in the designated radio frames through a subframe 4 of the (i + f)th radio frame in the designated radio frames correspond to a same narrowband, or the subframe 4 of the ith radio frame in the designated radio frames through the subframe 0 of the (i + f)th radio frame in the designated radio frames correspond to a same narrowband;
when the available subframes are subframes {0, 5, 9} in the designated radio frames and the time-domain granularity for frequency hopping is Y = 3f available subframes or Y = 10f physical subframes,

the subframe 9 of the ith radio frame in the designated radio frames through a subframe 5 of the (i + f)th radio frame in the designated radio frames correspond to a same narrowband, or
a subframe 5 of the ith radio frame in the designated radio frames through the subframe 0 of the (i + f)th radio frame in the designated radio frames correspond to a same narrowband; and

when the available subframes are subframes {4, 5, 9} in the designated radio frames and the time-domain granularity for frequency hopping is Y = 3f available subframes or Y = 10f physical subframes,

the subframe 9 of the ith radio frame in the designated radio frames through the subframe 5 of the (i + f)th radio frame in the designated radio frames correspond to a same narrowband, or

the subframe 4 of the ith radio frame in the designated radio frames through a subframe 9 of the (i + f- 1)th radio frame in the designated radio frames correspond to a same narrowband,

wherein the ith radio frame is preset, and i is a positive integer.

6. The method of claim 3 or 5, wherein a value of the serial number i is determined by at least one of a cell identifier, a system bandwidth, the time-domain granularity for frequency hopping, a radio frame index and a subframe index.

7. An information transmission apparatus comprising:

an acquisition module, which is configured to acquire a frequency hopping pattern; and
a sending module, which is configured to send information or a channel on a plurality of available subframes according to the frequency hopping pattern,
wherein a time-domain granularity for frequency hopping of the frequency hopping pattern is determined by the available subframes,
wherein the time-domain granularity for frequency hopping of the frequency hopping pattern is determined by the available subframes in one of the following modes:

mode a: when the available subframes are subframes {0, 4, 5, 9} in designated radio frames or two subframes of the subframes {0, 4, 5, 9} in the designated radio frames,

the time-domain granularity for frequency hopping is Y = 2f available subframes, or
the time-domain granularity for frequency hopping is Y = 5f physical subframes;

mode b: when the available subframes are three subframes of the subframes {0, 4, 5, 9} in the designated radio frames,

the time-domain granularity for frequency hopping is Y = 3f available subframes, or
the time-domain granularity for frequency hopping is Y = 10f physical subframes;

mode c: when the available subframes are one subframe of the subframes {0, 4, 5, 9} in the designated radio frames,

the time-domain granularity for frequency hopping is Y available subframes, or
the time-domain granularity for frequency hopping is Y = 10f physical subframes; and

mode d: when the available subframes are m subframes of subframes {0, 4, 5, 9} of one radio frame in the designated radio frames,

the time-domain granularity for frequency hopping on the one radio frame is Y = m available subframes, or
the time-domain granularity for frequency hopping on the one radio frame is Y = 10f physical subframes, wherein $1 \leq m \leq 4$ and m is an integer,

wherein f is a predefined positive integer, and wherein Y is an integer equal to or greater than 1.

8. A storage medium, **characterized in that** the storage medium comprises program codes which, when executed by a computing device, cause the computing device to carry out the steps of the information transmission method according to claim 1.

**Patentansprüche**

1. Informationsübertragungsverfahren, umfassend:

Erfassen eines Frequenzsprungmusters; und

Senden von Informationen oder eines Kanals in einer Vielzahl von verfügbaren Unterrahmen, gemäß dem Frequenzsprungmuster,

wobei eine Granularität des Zeitbereichs für Frequenzsprünge des Frequenzsprungmusters durch die verfügbaren Unterrahmen bestimmt wird,

wobei die Granularität des Zeitbereichs für Frequenzsprünge des Frequenzsprungmusters durch die verfügbaren Unterrahmen nach einem der folgenden Modi bestimmt wird:

Modus a: wenn es sich bei den verfügbaren Unterrahmen um die Unterrahmen {0, 4, 5, 9} in vorgesehenen Funkrahmen, oder zwei Unterrahmen der Unterrahmen {0, 4, 5, 9} in den vorgesehenen Funkrahmen handelt,

beträgt die Granularität des Zeitbereichs für Frequenzsprünge Y = 2f verfügbare Unterrahmen, oder beträgt die Granularität des Zeitbereichs für Frequenzsprünge Y = 5f physikalische Unterrahmen;

Modus b: wenn es sich bei den verfügbaren Unterrahmen um drei Unterrahmen der Unterrahmen {0, 4, 5, 9} in den vorgesehenen Funkrahmen handelt,

beträgt die Granularität des Zeitbereichs für Frequenzsprünge Y = 3f verfügbare Unterrahmen, oder beträgt die Granularität des Zeitbereichs für Frequenzsprünge Y = 10f physikalische Unterrahmen;

Modus c: wenn es sich bei den verfügbaren Unterrahmen um einen Unterrahmen der Unterrahmen {0, 4, 5, 9} in den vorgesehenen Funkrahmen handelt,

beträgt die Granularität des Zeitbereichs für Frequenzsprünge Y verfügbare Unterrahmen, oder beträgt die Granularität des Zeitbereichs für Frequenzsprünge Y = 10f physikalische Unterrahmen; und

Modus d: wenn es sich bei den verfügbaren Unterrahmen um m Unterrahmen der Unterrahmen {0, 4, 5, 9} eines Funkrahmens in den vorgesehenen Funkrahmen handelt,

beträgt die Granularität des Zeitbereichs für Frequenzsprünge in dem einen Funkrahmen Y = m verfügbare Unterrahmen, oder beträgt die Granularität des Zeitbereichs für Frequenzsprünge in dem einen Funkrahmen Y = 10f physikalische Unterrahmen, wobei $1 \leq m \leq 4$ und m eine ganze Zahl ist,

wobei f eine vordefinierte positive ganze Zahl ist, und wobei Y eine ganze Zahl gleich oder größer als 1 ist.

2. Verfahren nach Anspruch 1, wobei der Modus a weiter umfasst:

wenn es sich bei den verfügbaren Unterrahmen um die Unterrahmen {4, 5} in den vorgesehenen Funkrahmen handelt, entsprechen ein Unterrahmen 4 und ein Unterrahmen 5 eines Funkrahmens in den vorgesehenen Funkrahmen demselben Schmalband;
wenn es sich bei den verfügbaren Unterrahmen um die Unterrahmen {0, 9} in den vorgesehenen Funkrahmen handelt, entsprechen ein Unterrahmen 9 eines Funkrahmens in den vorgesehenen Funkrahmen und ein Unterrahmen 0 eines nächsten Funkrahmens des einen Funkrahmens demselben Schmalband; und
wenn es sich bei den verfügbaren Unterrahmen um die Unterrahmen {0, 4, 5, 9} in den vorgesehenen Funkrahmen handelt, umfasst der Modus a einen der folgenden Modi:

Modus a1: ein Unterrahmen 4, ein Unterrahmen 5 und ein Unterrahmen 9 eines Funkrahmens in den vorgesehenen Funkrahmen, und ein Unterrahmen 0 eines nächsten Funkrahmens des einen Funkrahmens entsprechen demselben Schmalband;
Modus a2: ein Unterrahmen 9 eines Funkrahmens in den vorgesehenen Funkrahmen, und ein Unterrahmen 0, ein Unterrahmen 4 und ein Unterrahmen 5 eines nächsten Funkrahmens des einen Funkrahmens entsprechen demselben Schmalband; und
Modus a3: ein Unterrahmen 4 und ein Unterrahmen 5 eines Funkrahmens in den vorgesehenen Funkrahmen entsprechen demselben Schmalband, und ein Unterrahmen 9 des einen Funkrahmens in den vorgesehenen Funkrahmen und ein ein Unterrahmen 0 eines nächsten Funkrahmens des einen Funkrahmens entsprechen demselben Schmalband.

3. Verfahren nach Anspruch 1 oder 2, wobei

wenn es sich bei den verfügbaren Unterrahmen um die Unterrahmen {4, 5} in den vorgesehenen Funkrahmen handelt und die Granularität des Zeitbereichs für Frequenzsprünge Y = 2f verfügbare Unterrahmen oder Y = 10f physikalische Unterrahmen beträgt, entsprechen ein Unterrahmen 4 eines i-ten Funkrahmens in den vorgesehenen Funkrahmen bis ein Unterrahmen 5 eines (i + f - 1)-ten Funkrahmens in den vorgesehenen Funkrahmen demselben Schmalband;

wenn es sich bei den verfügbaren Unterrahmen um die Unterrahmen {0, 9} in den vorgesehenen Funkrahmen handelt und die Granularität des Zeitbereichs für Frequenzsprünge Y = 2f verfügbare Unterrahmen oder Y = 10f physikalische Unterrahmen beträgt, entsprechen ein Unterrahmen 9 des i-ten Funkrahmens in den vorgesehenen Funkrahmen bis ein Unterrahmen 0 eines (i + f)-ten Funkrahmens in den vorgesehenen Funkrahmen demselben Schmalband; und

wenn es sich bei den verfügbaren Unterrahmen um die Unterrahmen {0, 4, 5, 9} in den vorgesehenen Funkrahmen handelt und die Granularität des Zeitbereichs für Frequenzsprünge Y = 2f verfügbare Unterrahmen oder Y = 5f physikalische Unterrahmen beträgt, sind die folgenden Modi umfasst:

Modus a1: wenn f eine gerade Zahl ist, entsprechen der Unterrahmen 4 des i-ten Funkrahmens in den vorgesehenen Funkrahmen bis ein Unterrahmen 0 eines (i + f/2)-ten Funkrahmens in den vorgesehenen Funkrahmen demselben Schmalband;

Modus a2: wenn f eine gerade Zahl ist, entsprechen der Unterrahmen 9 des i-ten Funkrahmens in den vorgesehenen Funkrahmen bis ein Unterrahmen 5 des (i + f/2)-ten Funkrahmens in den vorgesehenen Funkrahmen demselben Schmalband; und

Modus a3: Wenn f eine ungerade Zahl ist, entsprechen der Unterrahmen 4 des i-ten Funkrahmens in den vorgesehenen Funkrahmen bis der Unterrahmen 5 des $(i + \lfloor f/2 \rfloor)$-ten Funkrahmens in den vorgesehenen Funkrahmen demselben Schmalband, und entsprechen ein Unterrahmen 9 des $(i + \lfloor f/2 \rfloor)$-ten Funkrahmens in den vorgesehenen Funkrahmen bis der Unterrahmen 0 des (i + f)-ten Funkrahmens in den vorgesehenen Funkrahmen demselben Schmalband,

wobei der i-te Funkrahmen voreingestellt ist, und i eine positive ganze Zahl ist.

4. Verfahren nach Anspruch 1, wobei der Modus b weiter umfasst:

wenn es sich bei den verfügbaren Unterrahmen um die Unterrahmen {0, 4, 5} in den vorgesehenen Funkrahmen handelt,

entsprechen ein Unterrahmen 4 und ein Unterrahmen 5 eines Funkrahmens in den vorgesehenen Funkrahmen und ein Unterrahmen 0 eines nächsten Funkrahmens des einen Funkrahmens demselben Schmalband, oder

entsprechen ein Unterrahmen 0, ein Unterrahmen 4 und ein Unterrahmen 5 eines Funkrahmens in den vorgesehenen Funkrahmen demselben Schmalband;

wenn es sich bei den verfügbaren Unterrahmen um die Unterrahmen {0, 4, 9} in den vorgesehenen Funkrahmen handelt,

entsprechen ein Unterrahmen 9 eines Funkrahmens in den vorgesehenen Funkrahmen und ein Unterrahmen 0 und ein Unterrahmen 4 eines nächsten Funkrahmens des einen Funkrahmens demselben Schmalband, oder

entsprechen ein Unterrahmen 4 und ein Unterrahmen 9 eines Funkrahmens in den vorgesehenen Funkrahmen und ein Unterrahmen 0 eines nächsten Funkrahmens des einen Funkrahmens demselben Schmalband;

wenn es sich bei den verfügbaren Unterrahmen um die Unterrahmen {0, 5, 9} in den vorgesehenen Funkrahmen handelt,

entsprechen ein Unterrahmen 9 eines Funkrahmens in den vorgesehenen Funkrahmen und ein Unterrahmen 0 und ein Unterrahmen 5 eines nächsten Funkrahmens des einen Funkrahmens demselben Schmalband, oder

entsprechen ein Unterrahmen 5 und ein Unterrahmen 9 eines Funkrahmens in den vorgesehenen Funkrahmen und ein Unterrahmen 0 eines nächsten Funkrahmens des einen Funkrahmens demselben Schmalband; und

wenn es sich bei den verfügbaren Unterrahmen um die Unterrahmen {4, 5, 9} in den vorgesehenen Funkrahmen handelt,

entsprechen ein Unterrahmen 4, ein Unterrahmen 5 und ein Unterrahmen 9 eines Funkrahmens in den vorgesehenen Funkrahmen demselben Schmalband, oder
entsprechen ein Unterrahmen 5 und ein Unterrahmen 9 eines Funkrahmens in den vorgesehenen Funkrahmen und ein Unterrahmen 4 eines nächsten Funkrahmens des einen Funkrahmens demselben Schmalband.

5. Verfahren nach Anspruch 1 oder 3, wobei

wenn es sich bei den verfügbaren Unterrahmen um die Unterrahmen {0, 4, 5} in den vorgesehenen Funkrahmen handelt und die Granularität des Zeitbereich für Frequenzsprünge Y = 3f verfügbare Unterrahmen oder Y = 10f physikalische Unterrahmen beträgt,

entsprechen ein Unterrahmen 4 eines i-ten Funkrahmens in den vorgesehenen Funkrahmen bis ein Unterrahmen 0 eines (i + f)-ten Funkrahmens in den vorgesehenen Funkrahmen demselben Schmalband, oder
entsprechen ein Unterrahmen 0 des i-ten Funkrahmens in den vorgesehenen Funkrahmen bis ein Unterrahmen 5 eines (i + f - 1)-ten Funkrahmens in den vorgesehenen Funkrahmen demselben Schmalband;

wenn es sich bei den verfügbaren Unterrahmen um die Unterrahmen {0, 4, 9} in den vorgesehenen Funkrahmen handelt und die Granularität des Zeitbereichs für Frequenzsprünge Y = 3f verfügbare Unterrahmen oder Y = 10f physikalische Unterrahmen beträgt,

entsprechen ein Unterrahmen 9 des i-ten Funkrahmens in den vorgesehenen Funkrahmen bis ein Unterrahmen 4 des (i + f)-ten Funkrahmens in den vorgesehenen Funkrahmen demselben Schmalband, oder
entsprechen der Unterrahmen 4 des i-ten Funkrahmens in den vorgesehenen Funkrahmen bis der Unterrahmen 0 des (i + f)-ten Funkrahmens in den vorgesehenen Funkrahmen demselben Schmalband;

wenn es sich bei den verfügbaren Unterrahmen um die Unterrahmen {0, 5, 9} in den vorgesehenen Funkrahmen handelt und die Granularität des Zeitbereichs für Frequenzhopping Y = 3f verfügbare Unterrahmen oder Y = 10f physikalische Unterrahmen beträgt,

entsprechen der Unterrahmen 9 des i-ten Funkrahmens in den vorgesehenen Funkrahmen bis ein Unterrahmen 5 des (i + f)-ten Funkrahmens in den vorgesehenen Funkrahmen demselben Schmalband, oder
entsprechen ein Unterrahmen 5 des i-ten Funkrahmens in den vorgesehenen Funkrahmen bis der Unterrahmen 0 des (i + f)-ten Funkrahmens in den vorgesehenen Funkrahmen demselben Schmalband; und

wenn es sich bei den verfügbaren Unterrahmen um die Unterrahmen {4, 5, 9} in den vorgesehenen Funkrahmen handelt und die Granularität des Zeitbereichs für Frequenzsprünge Y = 3f verfügbare Unterrahmen oder Y = 10f physikalische Unterrahmen beträgt,

entsprechen der Unterrahmen 9 des i-ten Funkrahmens in den vorgesehenen Funkrahmen bis der Unterrahmen 5 des (i + f)-ten Funkrahmens in den vorgesehenen Funkrahmen demselben Schmalband, oder
entsprechen der Unterrahmen 4 des i-ten Funkrahmens in den vorgesehenen Funkrahmen bis ein Unterrahmen 9 des (i + f - 1)-ten Funkrahmens in den vorgesehenen Funkrahmen demselben Schmalband,

wobei der i-te Funkrahmen voreingestellt ist, und i eine positive ganze Zahl ist.

6. Verfahren nach Anspruch 3 oder 5, wobei ein Wert der Seriennummer i durch mindestens eines aus einer Zellenkennung, einer Systembandbreite, der Granularität des Zeitbereichs für Frequenzsprünge, einem Funkrahmenindex und einem Unterrahmenindex bestimmt wird.

7. Informationsübertragungsvorrichtung, umfassend:

ein Erfassungsmodul, das so ausgelegt ist, dass es ein Frequenzsprungmuster erfasst; und
ein Sendemodul, das so ausgelegt ist, dass es Informationen oder einen Kanal in einer Vielzahl von verfügbaren Unterrahmen, gemäß dem Frequenzsprungmuster, sendet,
wobei eine Granularität des Zeitbereichs für Frequenzsprünge des Frequenzsprungmusters durch die verfügbaren Unterrahmen bestimmt wird,
wobei die Granularität des Zeitbereichs für Frequenzsprünge des Frequenzsprungmusters durch die verfügbaren Unterrahmen nach einem der folgenden Modi bestimmt wird:

Modus a: wenn es sich bei den verfügbaren Unterrahmen um die Unterrahmen {0, 4, 5, 9} in vorgesehenen Funkrahmen, oder zwei Unterrahmen der Unterrahmen {0, 4, 5, 9} in den vorgesehenen Funkrahmen handelt,

beträgt die Granularität des Zeitbereichs für Frequenzsprünge Y = 2f verfügbare Unterrahmen, oder
beträgt die Granularität des Zeitbereichs für Frequenzsprünge Y = 5f physikalische Unterrahmen;

Modus b: wenn es sich bei den verfügbaren Unterrahmen um drei Unterrahmen der Unterrahmen {0, 4, 5, 9} in den vorgesehenen Funkrahmen handelt,

beträgt die Granularität des Zeitbereichs für Frequenzsprünge Y = 3f verfügbare Unterrahmen, oder
beträgt die Granularität des Zeitbereichs für Frequenzsprünge Y = 10f physikalische Unterrahmen;

Modus c: wenn es sich bei den verfügbaren Unterrahmen um einen Unterrahmen der Unterrahmen {0, 4, 5, 9} in den vorgesehenen Funkrahmen handelt,

beträgt die Granularität des Zeitbereichs für Frequenzsprünge Y verfügbare Unterrahmen, oder
beträgt die Granularität des Zeitbereichs für Frequenzsprünge Y = 10f physikalische Unterrahmen; und

Modus d: wenn es sich bei den verfügbaren Unterrahmen um m Unterrahmen der Unterrahmen {0, 4, 5, 9} eines Funkrahmens in den vorgesehenen Funkrahmen handelt,

beträgt die Granularität des Zeitbereichs für Frequenzsprünge in dem einen Funkrahmen Y = m verfügbare Unterrahmen, oder
beträgt die Granularität des Zeitbereichs für Frequenzsprünge in dem einen Funkrahmen Y = 10f physikalische Unterrahmen,
wobei $1 \leq m \leq 4$ und m eine ganze Zahl ist,

wobei f eine vordefinierte positive ganze Zahl ist, und wobei Y eine ganze Zahl gleich oder größer als 1 ist.

8. Speichermedium, **dadurch gekennzeichnet, dass** das Speichermedium Programmcodes umfasst, die, wenn sie von einer Rechenvorrichtung ausgeführt werden, die Rechenvorrichtung dazu bringen, die Schritte des Informationsübertragungsverfahrens nach Anspruch 1 durchzuführen.


## Revendications

1. Méthode de transmission d'informations comprenant :

l'acquisition d'un modèle de saut de fréquence ; et
l'envoi d'informations ou d'un canal sur une pluralité de sous-trames disponibles en fonction du modèle de saut de fréquence,
dans laquelle une granularité de domaine temporel pour le saut de fréquence du modèle de saut de fréquence est déterminée par les sous-trames disponibles,
dans laquelle la granularité de domaine temporel pour le saut de fréquence du modèle de saut de fréquence est déterminée par les sous-trames disponibles dans un des modes suivants :

mode a : quand les sous-trames disponibles sont des sous-trames {0, 4, 5, 9} dans des trames radio désignées ou deux sous-trames des sous-trames {0, 4, 5, 9} dans les trames radio désignées,
la granularité de domaine temporel pour le saut de fréquence est Y = 2f sous-trames disponibles, ou

la granularité de domaine temporel pour le saut de fréquence est Y = 5f sous-trames physiques ;

mode b : quand les sous-trames disponibles sont trois sous-trames des sous-trames {0, 4, 5, 9} dans les trames radio désignées,

la granularité de domaine temporel pour le saut de fréquence est Y = 3f sous-trames disponibles, ou

la granularité de domaine temporel pour le saut de fréquence est Y = 10f sous-trames physiques ;

mode c : quand les sous-trames disponibles sont une sous-trame des sous-trames {0, 4, 5, 9} dans les trames radio désignées,

la granularité de domaine temporel pour le saut de fréquence est Y sous-trames disponibles, ou

la granularité de domaine temporel pour le saut de fréquence est Y = 10f sous-trames physiques ; et

mode d : quand les sous-trames disponibles sont m sous-trames de sous-trames {0, 4, 5, 9} d'une trame radio dans les trames radio désignées,

la granularité de domaine temporel pour le saut de fréquence sur la trame radio est Y = m sous-trames disponibles, ou

la granularité de domaine temporel pour le saut de fréquence sur la trame radio est Y = 10f sous-trames physiques,

dans laquelle $1 \leq m \leq 4$ et m est un entier,

dans laquelle f est un entier positif prédéfini, et dans laquelle Y est un entier égal ou supérieur à 1.

2. Méthode selon la revendication 1, dans laquelle le mode a comprend en outre :

quand les sous-trames disponibles sont des sous-trames {4, 5} dans les trames radio désignées, une sous-trame 4 et une sous-trame 5 d'une trame radio dans les trames radio désignées correspondent à une même bande étroite ;

quand les sous-trames disponibles sont des sous-trames {0, 9} dans les trames radio désignées, une sous-trame 9 d'une trame radio dans les trames radio désignées et une sous-trame 0 d'une trame radio suivante de l'une trame radio correspondent à une même bande étroite ; et

quand les sous-trames disponibles sont les sous-trames {0, 4, 5, 9} dans les trames radio désignées, le mode a comprend un des modes suivants :

mode a1 : une sous-trame 4, une sous-trame 5 et une sous-trame 9 d'une trame radio dans les trames radio désignées et une sous-trame 0 d'une trame radio suivante de l'une trame radio correspondent à une même bande étroite ;

mode a2 : une sous-trame 9 d'une trame radio dans les trames radio désignées et une sous-trame 0, une sous-trame 4 et une sous-trame 5 d'une trame radio suivante de l'une trame radio correspondent à une même bande étroite ; et

mode a3 : une sous-trame 4 et une sous-trame 5 d'une trame radio dans les trames radio désignées correspondent à une même bande étroite et une sous-trame 9 d'une trame radio dans les trames radio désignées et une sous-trame 0 d'une trame radio suivante de l'une trame radio correspondent à une même bande étroite.

3. Méthode selon la revendication 1 ou 2, dans laquelle

quand les sous-trames disponibles sont les sous-trames {4, 5} dans les trames radio désignées et la granularité de domaine temporel pour le saut de fréquence est Y = 2f sous-trames disponibles ou Y = 10f sous-trames physiques, une sous-trame 4 d'une i-ème trame radio dans les trames radio désignées jusqu'à une sous-trame 5 d'une (i + f - 1)-ème trame radio dans les trames radio désignées correspondent à une même bande étroite ;

quand les sous-trames disponibles sont les sous-trames {0, 9} dans les trames radio désignées et la granularité de domaine temporel pour le saut de fréquence est Y = 2f sous-trames disponibles ou Y = 10f sous-trames physiques, une sous-trame 9 de l'i-ème trame radio dans les trames radio désignées jusqu'à une sous-trame 0 d'une (i + f)-ème trame radio dans les trames radio désignées correspondent à une même bande étroite ; et

quand les sous-trames disponibles sont les sous-trames {0, 4, 5, 9} dans les trames radio désignées et la granularité de domaine temporel pour le saut de fréquence est Y = 2f sous-trames disponibles ou Y = 5f sous-trames physiques, les modes suivants sont inclus :

mode a1 : quand f est un nombre pair, la sous-trame 4 de l'i-ème trame radio dans les trames radio désignées jusqu'à une sous-trame 0 d'une (i + f/2)-ème trame radio dans les trames radio désignées correspondent à une même bande étroite ;

mode a2 : quand f est un nombre pair, la sous-trame 9 de l'i-ème trame radio dans les trames radio désignées jusqu'à une sous-trame 5 de la (i + f/2)-ème trame radio dans les trames radio désignées correspondent à une même bande étroite ; et

mode a3 : quand f est un nombre impair, la sous-trame 4 de l'i-ème trame radio dans les trames radio désignées jusqu'à la sous-trame 5 de la (i + ⌊f/2⌋)-ème trame radio dans les trames radio désignées correspondent à une même bande étroite, et une sous-trame 9 de la (i + ⌊f/2⌋)-ème trame radio dans les trames radio désignées jusqu'à la sous-trame 0 de la (i + f)-ème trame radio dans les trames radio désignées correspondent à une même bande étroite,

dans laquelle l'i-ème trame radio est prédéfinie et i est un entier positif.

4. Méthode selon la revendication 1, dans laquelle le mode b comprend en outre :

quand les sous-trames disponibles sont des sous-trames {0, 4, 5} dans les trames radio désignées, une sous-trame 4 et une sous-trame 5 d'une trame radio dans les trames radio désignées et une sous-trame 0 d'une trame radio suivante de l'une trame radio correspondent à une même bande étroite, ou une sous-trame 0, une sous-trame 4 et une sous-trame 5 d'une trame radio dans les trames radio désignées correspondent à une même bande étroite ;

quand les sous-trames disponibles sont des sous-trames {0, 4, 9} dans les trames radio désignées, une sous-trame 9 d'une trame radio dans les trames radio désignées et une sous-trame 0 et une sous-trame 4 d'une trame radio suivante de l'une trame radio correspondent à une même bande étroite, ou une sous-trame 4 et une sous-trame 9 d'une trame radio dans les trames radio désignées et une sous-trame 0 d'une trame radio suivante de l'une trame radio correspondent à une même bande étroite ;

quand les sous-trames disponibles sont des sous-trames {0, 5, 9} dans les trames radio désignées, une sous-trame 9 d'une trame radio dans les trames radio désignées et une sous-trame 0 et une sous-trame 5 d'une trame radio suivante de l'une trame radio correspondent à une même bande étroite, ou une sous-trame 5 et une sous-trame 9 d'une trame radio dans les trames radio désignées et une sous-trame 0 d'une trame radio suivante de l'une trame radio correspondent à une même bande étroite ; et

quand les sous-trames disponibles sont des sous-trames {4, 5, 9} dans les trames radio désignées, une sous-trame 4, une sous-trame 5 et une sous-trame 9 d'une trame radio dans les trames radio désignées correspondent à une même bande étroite, ou une sous-trame 5 et une sous-trame 9 d'une trame radio dans les trames radio désignées et une sous-trame 4 d'une trame radio suivante de l'une trame radio correspondent à une même bande étroite.

5. Méthode selon la revendication 1 ou 3, dans laquelle

quand les sous-trames disponibles des sous-trames {0, 4, 5} dans les trames radio désignées et la granularité de domaine temporel pour le saut de fréquence est Y = 3f sous-trames disponibles ou Y = 10f sous-trames physiques, une sous-trame 4 d'une i-ème trame radio dans les trames radio désignées jusqu'à une sous-trame 0 d'une (i + f)-ème trame radio dans les trames radio désignées correspondent à une même bande étroite, ou une sous-trame 0 de l'i-ème trame radio dans les trames radio désignées jusqu'à une sous-trame 5 d'une (i + f - 1)-ème trame radio dans les trames radio désignées correspondent à une même bande étroite ;

quand les sous-trames disponibles sont des sous-trames {0, 4, 9} dans les trames radio désignées et la granularité de domaine temporel pour le saut de fréquence est Y = 3f sous-trames disponibles ou Y = 10f sous-trames physiques, une sous-trame 9 de l'i-ème trame radio dans les trames radio désignées jusqu'à une sous-trame 4 de la (i + f)-ème trame radio dans les trames radio désignées correspondent à une même bande étroite, ou la sous-trame 4 de l'i-ème trame radio dans les trames radio désignées jusqu'à la sous-trame 0 de la (i + f)-ème trame radio dans les trames radio désignées correspondent à une même bande étroite ;

quand les sous-trames disponibles sont des sous-trames {0, 5, 9} dans les trames radio désignées et la granularité de domaine temporel pour le saut de fréquence est Y = 3f sous-trames disponibles ou Y = 10f sous-trames physiques, la sous-trame 9 de l'i-ème trame radio dans les trames radio désignées jusqu'à une sous-trame 5 de la (i + f)-ème trame radio dans les trames radio désignées correspondent à une même bande étroite, ou une sous-trame 5 de l'i-ème trame radio dans les trames radio désignées jusqu'à la sous-trame 0 de la (i + f)-ème trame radio dans les trames radio désignées correspondent à une même bande étroite ; et

quand les sous-trames disponibles sont des sous-trames {4, 5, 9} dans les trames radio désignées et la granularité de domaine temporel pour le saut de fréquence est Y = 3f sous-trames disponibles ou Y = 10f sous-trames physiques,

une sous-trame 9 de l'i-ème trame radio dans les trames radio désignées jusqu'à la sous-trame 5 de la (i + f)-ème trame radio dans les trames radio désignées correspondent à une même bande étroite, ou
la sous-trame 4 de l'i-ème trame radio dans les trames radio désignées jusqu'à une sous-trame 9 de la (i + f - 1)-ème trame radio dans les trames radio désignées correspondent à une même bande étroite,
dans laquelle l'i-ème trame radio est prédéfinie et i est un entier positif.

6. Méthode selon la revendication 3 ou 5, dans laquelle une valeur du numéro séquentiel i est déterminée par au moins un parmi un identifiant de cellule, une largeur de bande de système, la granularité de domaine temporel pour le saut de fréquence, un indice de trame radio et un indice de sous-trame.

7. Appareil de transmission d'informations comprenant :

un module d'acquisition qui est configuré pour acquérir un modèle de saut de fréquence ; et
un module d'envoi qui est configuré pour envoyer des informations ou d'un canal sur une pluralité de sous-trames disponibles en fonction du modèle de saut de fréquence,
dans lequel une granularité de domaine temporel pour le saut de fréquence du modèle de saut de fréquence est déterminée par les sous-trames disponibles,
dans lequel la granularité de domaine temporel pour le saut de fréquence du modèle de saut de fréquence est déterminée par les sous-trames disponibles dans un des modes suivants :

mode a : quand les sous-trames disponibles sont des sous-trames {0, 4, 5, 9} dans des trames radio désignées ou deux sous-trames des sous-trames {0, 4, 5, 9} dans les trames radio désignées,
la granularité de domaine temporel pour le saut de fréquence est Y = 2f sous-trames disponibles, ou
la granularité de domaine temporel pour le saut de fréquence est Y = 5f sous-trames physiques ;
mode b : quand les sous-trames disponibles sont trois sous-trames des sous-trames {0, 4, 5, 9} dans les trames radio désignées,
la granularité de domaine temporel pour le saut de fréquence est Y = 3f sous-trames disponibles, ou
la granularité de domaine temporel pour le saut de fréquence est Y = 10f sous-trames physiques ;
mode c : quand les sous-trames disponibles sont une sous-trame des sous-trames {0, 4, 5, 9} dans les trames radio désignées,
la granularité de domaine temporel pour le saut de fréquence est Y sous-trames disponibles, ou
la granularité de domaine temporel pour le saut de fréquence est Y = 10f sous-trames physiques ; et
mode d : quand les sous-trames disponibles sont m sous-trames de sous-trames {0, 4, 5, 9} d'une trame radio dans les trames radio désignées,
la granularité de domaine temporel pour le saut de fréquence sur la trame radio est Y = m sous-trames disponibles, ou
la granularité de domaine temporel pour le saut de fréquence sur la trame radio est Y = 10f sous-trames physiques,
dans lequel $1 \leq m \leq 4$ et m est un entier,
dans lequel f est un entier positif prédéfini, et dans lequel Y est un entier égal ou supérieur à 1.

8. Support de stockage **caractérisé en ce que** le support de stockage comprend des codes de programme qui, quand ils sont exécutés par un dispositif informatique, amènent le dispositif informatique à réaliser les étapes de la méthode de transmission d'informations selon la revendication 1.

| | Acquire a frequency hopping pattern | 101 |

Send information or a channel on a plurality of available subframes according to the frequency hopping pattern, wherein a time-domain granularity for frequency hopping of the frequency hopping pattern is determined by the available subframes | 102

**FIG. 1**

Subframe | 0 | | 4 | 5 | ... | 9 | 0 | ... | 4 | 5 | ... | 9 | 0

**FIG. 2**

**FIG. 3**

System bandwidth

Subframe | 5 | ... | 9 | 0 | ... | 5 | ... | 9 | 0

...

**FIG. 4**

Acquisition module 501

Sending module 502

**FIG. 5**